# EUROPEAN PATENT APPLICATION

(11) **EP 4 842 122 A1**
(43) Date of publication of application: **18.11.2026**
(21) Application number: 25751615.3
(22) Date of filing: 07.02.2025
(51) Int. Cl.: H04W 72/231

(54) **COMMUNICATION METHOD AND APPARATUS, TERMINAL DEVICE, AND NETWORK DEVICE**

(30) Priority: 08.02.2024 CN 202410178242
(71) Applicant: Honor Device Co., Ltd., Shenzhen, Guangdong 518040 (CN)
(72) Inventor: CHI, Liangang, Shenzhen, Guangdong 518040 (CN)
(74) Representative: Gill Jennings & Every LLP
(86) International application number: PCT/CN2025/076088
(87) International publication number: WO 2025/168016

(57) **Abstract**

This application discloses a communication method and apparatus, a terminal device, and a network device, and relates to the field of communication technologies. To cope with CLI in a full-duplex mode, the network device in this application may configure one or more candidate CLI measurement resources based on resource configuration information. After the terminal device performs CLI measurement based on a CLI measurement resource determined from the one or more candidate CLI measurement resources, the terminal device sends a CLI measurement report to the network device. The CLI measurement report may include a CLI measurement result, such that the CLI measurement result is reported to the network device via the CLI measurement report, thereby implementing CLI measurement reporting. In this way, the network device may perform processing such as related scheduling based on the CLI measurement result, to better suppress or resist the CLI and avoid or mitigate impact of the CLI on performance such as network stability.

## Description

This application claims priority to Chinese Patent Application No. 202410178242.3, filed with the China National Intellectual Property Administration on February 8, 2024 and entitled "COMMUNICATION METHOD AND APPARATUS, TERMINAL DEVICE, AND NETWORK DEVICE", which is incorporated herein by reference in its entirety.

### TECHNICAL FIELD

This application relates to the field of communication technologies, and in particular, to a communication method and apparatus, a terminal device, and a network device.

### BACKGROUND

In a mobile communication system, existing uplink and downlink data transmission modes may be classified into time division duplex (time division duplex, TDD) and frequency division duplex (frequency division Duplex, FDD) modes. TDD is a duplex mode for implementing uplink and downlink transmission through time division. In a TDD system, reception and transmission occur at a same frequency but at different times. When TDD uplink-downlink configurations between neighboring cells are different or different terminal devices in a same cell have different TDD configurations, uplink transmission of a terminal device may cause interference to downlink reception of another terminal device. This interference is referred to as cross-link interference (cross link interference, CLI).

With development of related technologies, a full-duplex (full duplex, FD) mode is expected to be introduced in the mobile communication system. In a scenario of a full-duplex system, subband non-overlapping full duplex (subband non-overlapping full duplex, SBFD) may implement full duplex on a network device side by dividing a single carrier into non-overlapping uplink and downlink subbands and performing data reception and transmission on the subbands separately. In other words, a network device supports the full-duplex mode, and may transmit and receive data simultaneously at the same frequency; or the network device supports an SBFD mode, where uplink and downlink may exist at any time in different subbands within a same SBFD symbol area.

The CLI is introduced as reception and transmission operations may be performed simultaneously in a plurality of subbands within a single carrier in a scenario of the full-duplex mode. For example, a downlink signal from a neighboring base station may cause interference to reception of an uplink signal from a serving base station, or a downlink signal from the serving base station may cause self-interference to the reception of the uplink signal from the serving base station, or an uplink signal from a neighboring terminal device may cause interference to reception of a downlink signal from a target terminal device.

### SUMMARY

To cope with CLI in a full duplex mode, this application provides a communication method and apparatus, a terminal device and a network device to expect to consider that the CLI on a specific resource needs to be accurately measured and reported in time, so that a network takes an effective measure to better suppress or resist the CLI; otherwise, a transmitted signal may be incorrectly received.

According to a first aspect, this application provides a communication method, including:
receiving resource configuration information, where the resource configuration information is used to configure one or more candidate CLI measurement resources;
performing CLI measurement based on a CLI measurement resource determined from the one or more candidate CLI measurement resources; and
sending a CLI measurement report.

It can be seen that, to cope with CLI in a full-duplex mode, a network device may configure the one or more candidate CLI measurement resources based on the resource configuration information. After a terminal device performs the CLI measurement based on the CLI measurement resource determined from the one or more candidate CLI measurement resources, the terminal device sends the CLI measurement report to the network device. The CLI measurement report may include a CLI measurement result, such that the CLI measurement result is reported to the network device via the CLI measurement report, thereby implementing CLI measurement reporting. In this way, the network device may perform processing such as related scheduling based on the CLI measurement result, to better suppress or resist the CLI and avoid or mitigate impact of the CLI on performance such as network stability.

In some possible examples, the resource configuration information includes at least one of the following: first resource identification information, time-frequency domain position information, or sounding reference signal SRS sequence information; the first resource identification information is used to configure an ID of the one or more candidate CLI measurement resources; the time-frequency domain position information is used to configure a time-frequency domain position of the one or more candidate CLI measurement resources; and the SRS sequence information is used to configure a sequence of SRS signals carried by the one or more candidate CLI measurement resources.

In this way, a network configuration of the ID of the one or more candidate CLI measurement resources may be implemented based on the first resource identification information, so that the terminal device may learn, based on the identifier of the CLI measurement resource, a CLI measurement resource that can be used.

With the time-frequency domain position information, the terminal device may learn, based on the time-frequency domain position of the CLI measurement resource, a CLI measurement resource that can be used.

Unlike the network device indicating an attacker/interfering party (a terminal device that applies the CLI) to send an SRS signal, and then the victim/interfered party (a terminal device subjected to the CLI) performing CLI measurement based on the SRS signal sent, in this embodiment, the network device may indicate, by using the SRS sequence information, an SRS signal to be received and measured by the victim/interfered party, so that the victim/interfered party performs the CLI measurement based on the indicated SRS signal.

In some possible examples, performing the CLI measurement based on the CLI measurement resource determined from the one or more candidate CLI measurement resources includes:
receiving first indication information, where the first indication information is used to indicate an activated or deactivated state of the one or more candidate CLI measurement resources; and
performing the CLI measurement based on one or more activated CLI measurement resources determined in the first indication information.

In this way, the activated CLI measurement resource used for the CLI measurement is configured based on the first indication information.

In some possible examples, the first indication information includes a bitmap, and each bit in the bitmap is in a one-to-one correspondence to each of the one or more candidate CLI measurement resources; and each bit in the bitmap is used to indicate an activated or deactivated state of a candidate CLI measurement resource corresponding to the bit.

In this way, the activated or deactivated state of the candidate CLI measurement resource is indicated by using the bitmap.

In some possible examples, the first indication information includes one or more pieces of identification information and each of the one or more pieces of identification information is in a one-to-one correspondence to each of the one or more candidate CLI measurement resources; and each of the one or more pieces of identification information is used to indicate an activated or deactivated state of a candidate CLI measurement resource corresponding to the identification information.

In this way, the activated or deactivated state of the candidate CLI measurement resource is indicated by using the identification information.

In some possible examples, the resource configuration information is carried by RRC signaling, and the first indication information is carried by a MAC CE.

In this way, in this embodiment, the one or more candidate CLI measurement resources are first configured by a network via the RRC signaling, and then the activated or deactivated state of each candidate CLI measurement resource is indicated via the MAC CE, to determine the CLI measurement resource used for the CLI measurement.

In some possible examples, performing the CLI measurement based on the CLI measurement resource determined from the one or more candidate CLI measurement resources includes:
receiving second indication information, where the second indication information is used to indicate one or more CLI measurement resources from the one or more candidate CLI measurement resources; and
performing the CLI measurement based on the one or more CLI measurement resources.

In this way, the CLI measurement resource used for the CLI measurement is configured based on the second indication information.

In some possible examples, the resource configuration information is carried by the RRC signaling, and the second indication information is carried by the group DCI or the UE specific DCI.

In this way, in this embodiment, the one or more candidate CLI measurement resources are first configured by a network via the RRC signaling, and then the one or more CLI measurement resources are indicated by using the group DCI or the UE specific DCI, to determine the CLI measurement resource used for the CLI measurement.

In some possible examples, the resource configuration information is carried by the MAC CE, and the second indication information is carried by the group DCI or the UE specific DCI.

In this way, in this embodiment, the one or more candidate CLI measurement resources are first configured by a network via the MAC CE, and then the one or more CLI measurement resources are indicated by using the group DCI or the UE specific DCI, to determine the CLI measurement resource used for the CLI measurement.

In some possible examples, the second indication information is a resource indication field corresponding to one or more terminal devices in the group DCI;
each terminal device corresponds to one resource indication field, or a plurality of terminal devices jointly correspond to a same resource indication field;
the one resource indication field is used to indicate one CLI measurement resource from the one or more candidate CLI measurement resources, and a value of the one resource indication field corresponds to one CLI measurement resource identifier ID; or
the one resource indication field is used to indicate a plurality of CLI measurement resources from the one or more candidate CLI measurement resources, and a value of the one resource indication field corresponds to one CLI measurement resource combination ID.

In this way, the terminal device may determine the one resource indication field corresponding to the terminal device from the group DCI based on its own terminal device identifier, then determine one or more CLI measurement resources from the one or more candidate CLI measurement resources based on the one resource indication field, and finally perform the CLI measurement based on the one or more CLI measurement resources.

In some possible examples, the second indication information is a resource indication field corresponding to one or more terminal devices in the group DCI;
each terminal device corresponds to a plurality of resource indication fields, or a plurality of terminal devices jointly correspond to a same resource indication field; and
each resource indication field is used to indicate one CLI measurement resource from the one or more candidate CLI measurement resources, and a value of each resource indication field corresponds to one CLI measurement resource ID.

In this way, the terminal device may determine the plurality of resource indication fields corresponding to the terminal device from the group DCI based on its own terminal device identifier, then determine one or more CLI measurement resources from the one or more candidate CLI measurement resources based on the plurality of resource indication fields, and finally perform the CLI measurement based on the one or more CLI measurement resources.

In some possible examples, the second indication information is a dedicated field or an existing field in the UE specific DCI.

The dedicated field is used to indicate one or more CLI measurement resources from the one or more candidate CLI measurement resources, and a value of the dedicated field corresponds to one CLI measurement resource ID or one CLI measurement resource combination ID; or
the existing field is used to indicate one or more CLI measurement resources from the one or more candidate CLI measurement resources, and a specific value of the existing field corresponds to one CLI measurement resource ID or one CLI measurement resource combination ID.

In this way, the CLI measurement resource used for the CLI measurement is indicated from the one or more candidate CLI measurement resources by using the dedicated field or the existing field in the UE specific DCI.

In some possible examples, performing the CLI measurement based on the CLI measurement resource determined from the one or more candidate CLI measurement resources includes:
receiving third indication information, where the third indication information is used to indicate an activated or deactivated state of the one or more candidate CLI measurement resources;
receiving fourth indication information, where the fourth indication information is used to indicate one or more CLI measurement resources from one or more activated CLI measurement resources determined in the third indication information; and
performing the CLI measurement based on the one or more CLI measurement resources.

In this way, the activated CLI measurement resource is configured first based on the third indication information, and then the activated CLI measurement resource used for the CLI measurement is configured based on the fourth indication information.

In some possible examples, the third indication information includes a bitmap, and each bit in the bitmap is in a one-to-one correspondence to each of the one or more candidate CLI measurement resources; and each bit in the bitmap is used to indicate an activated or deactivated state of a candidate CLI measurement resource corresponding to the bit.

In this way, the activated or deactivated state of the candidate CLI measurement resource is indicated by using the bitmap.

In some possible examples, the third indication information includes one or more pieces of identification information and each of the one or more pieces of identification information is in a one-to-one correspondence to each of the one or more candidate CLI measurement resources; and each of the one or more pieces of identification information is used to indicate an activated or deactivated state of a candidate CLI measurement resource corresponding to the identification information.

In this way, the activated or deactivated state of the candidate CLI measurement resource is indicated by using the identification information.

In some possible examples, the resource configuration information is carried by the RRC signaling, the third indication information is carried by the MAC CE, and the fourth indication information is carried by the group DCI or the UE specific DCI.

In this way, in this embodiment, the one or more candidate CLI measurement resources are first configured by the network via the RRC signaling, then the one or more activated CLI measurement resources are indicated via the MAC, and finally the one or more CLI measurement resources are indicated by using the group DCI or the UE specific DCI, to determine the CLI measurement resource used for the CLI measurement.

In some possible examples, the fourth indication information may be a resource indication field corresponding to one or more terminal devices in the group DCI. Each terminal device corresponds to one resource indication field, or a plurality of terminal devices share one resource indication field; and the one resource indication field is used to indicate one CLI measurement resource from the one or more activated CLI measurement resources, and a value of the one resource indication field corresponds to one CLI measurement resource ID.

In this way, the one CLI measurement resource used for the CLI measurement is indicated from the one or more activated CLI measurement resources by using the resource indication field in the group DCI.

In some possible examples, the fourth indication information may be a resource indication field corresponding to one or more terminal devices in the group DCI. Each terminal device corresponds to one resource indication field, or a plurality of terminal devices share one resource indication field; and the one resource indication field is used to indicate a plurality of CLI measurement resources from the one or more activated CLI measurement resources, and a value of the one resource indication field corresponds to one CLI measurement resource combination ID.

In this way, the plurality of CLI measurement resources used for the CLI measurement are indicated from the one or more activated CLI measurement resources by using the resource indication field in the group DCI.

In some possible examples, the fourth indication information may be a resource indication field corresponding to one or more terminal devices in the group DCI. Each terminal device corresponds to a plurality of resource indication fields, or a plurality of terminal devices share one resource indication field; and each resource indication field is used to indicate one CLI measurement resource from the one or more activated CLI measurement resources, and a value of each resource indication field corresponds to one CLI measurement resource ID.

In this way, one or more CLI measurement resources used for the CLI measurement are indicated from the one or more activated CLI measurement resources by using the resource indication field in the group DCI.

In some possible examples, the fourth indication information may be a dedicated field in UE specific DCI; and the dedicated field is used to indicate one or more CLI measurement resources from the one or more activated CLI measurement resources, and a value of the dedicated field corresponds to one CLI measurement resource ID or one CLI measurement resource combination ID.

In this way, the one or more CLI measurement resources are indicated from the one or more activated CLI measurement resources by using the dedicated field in the UE specific DCI.

In some possible examples, the fourth indication information may be an existing field in UE specific DCI; and the existing field is used to indicate one or more CLI measurement resources from the one or more activated CLI measurement resources, and a specific value of the existing field corresponds to one CLI measurement resource ID or one CLI measurement resource combination ID.

In this way, the one or more CLI measurement resources are indicated from the one or more activated CLI measurement resources by using the existing field in the UE specific DCI.

In some possible examples, the CLI measurement report includes second resource identification information; and the second resource identification information is used to indicate a CLI measurement resource ID corresponding to the CLI measurement resource determined from the one or more candidate CLI measurement resources.

In this way, the CLI measurement resource ID corresponding to the CLI measurement resource determined by the terminal device is reported by using the second resource identification information, so that the network device can learn the CLI measurement resource used for the CLI measurement.

In some possible examples, the second resource identification information is carried by a MAC CE; and the second resource identification information includes one or more CLI measurement resource ID values, and each CLI measurement resource ID value occupies M bits of the MAC CE, where M is a positive integer.

In this way, the terminal device may report the one or more CLI measurement resource ID values via the MAC CE. After the network device receives the one or more CLI measurement resource ID values, the network device may obtain the CLI measurement resource used for the CLI measurement.

In some possible examples, the second resource identification information is carried by UCI; and the second resource identification information occupies $\left⌈{log}_{2}\left(K\right)\right⌉$ bits of the UCI, and *K* represents a quantity of CLI measurement resources determined from the one or more candidate CLI measurement resources.

In this way, the terminal device may report, by using the UCI, the CLI measurement resource ID corresponding to the CLI measurement resource determined by the terminal device, so that the network device can learn the CLI measurement resource used for the CLI measurement.

In some possible examples, the CLI measurement report includes CLI measurement result information; and the CLI measurement result information is used to indicate a measurement result obtained by performing the CLI measurement based on the CLI measurement resource determined from the one or more candidate CLI measurement resources.

In this way, the measurement result obtained by performing the CLI measurement based on the CLI measurement resource determined by the terminal device is reported by using the CLI measurement result information, so that the network device can learn the measurement result.

In some possible examples, the CLI measurement result information is carried by the MAC CE; the CLI measurement result information includes one or more CLI reported values, and each CLI reported value corresponds to an interval within which one CLI measured value falls; or the CLI measurement result information includes one or more CLI measured values.

In this way, the terminal device may report the one or more CLI reported values via the MAC CE. After the network device receives the one or more CLI reported values, the network device may determine the CLI measured value based on a correspondence between the CLI reported value and the interval within which the CLI measured value falls, to obtain the CLI measurement result.

In some possible examples, the CLI measurement result information is carried by the UCI; the CLI measurement result information includes one or more absolute CLI reported values, and each absolute CLI reported value corresponds to an interval within which one absolute CLI measured value falls; and/or the CLI measurement result information includes one or more differential CLI reported values, and each differential CLI reported value corresponds to an interval within which one differential CLI measured value falls.

In this way, the terminal device may report the one or more absolute CLI reported values and/or the one or more differential reported values by using the UCI. After the network device receives these CLI reported values, the network device may determine the CLI measured value based on a correspondence between the CLI reported value and the interval within which the CLI measured value falls, to obtain the CLI measurement result.

In some possible examples, the CLI measurement result information is carried by the UCI; if *K* ≥ 2 , and *K* represents a quantity of CLI measurement resources determined from the one or more candidate CLI measurement resources, the CLI measurement result information includes one absolute CLI reported value and one or more differential CLI reported values; the one absolute CLI reported value corresponds to an interval within which one reference CLI measured value falls; and each differential CLI reported value corresponds to an interval within which another CLI measured value other than the one reference CLI measured value falls.

In this way, if *K* ≥ 2 , the terminal device may report the interval within which the reference CLI measured value falls by using the absolute CLI reported value, and the another CLI measured value other than the one reference CLI measured value is reported by using the differential CLI reported value.

According to a second aspect, this application provides a communication method, including:
sending resource configuration information, where the resource configuration information is used to configure one or more candidate CLI measurement resources; and
receiving a CLI measurement report.

According to a third aspect, this application provides a communication apparatus, including:
a receiving unit, configured to receive resource configuration information, where the resource configuration information is used to configure one or more candidate CLI measurement resources;
a measurement unit, configured to perform CLI measurement based on a CLI measurement resource determined from the one or more candidate CLI measurement resources; and
a transmitting unit, configured to send a CLI measurement report.

According to a fourth aspect, this application provides a communication apparatus, including:
a transmitting unit, configured to send resource configuration information, where the resource configuration information is used to configure one or more candidate CLI measurement resources; and
a receiving unit, configured to receive a CLI measurement report.

According to a fifth aspect, the steps in the method designed in the first aspect are applied to a terminal device.

According to a sixth aspect, the steps in the method designed in the second aspect are applied to a network device.

According to a seventh aspect, this application provides a terminal device, including a processor, a memory, and a computer program or instructions stored in the memory, where the processor executes the computer program or instructions to implement the steps in the method designed in the first aspect.

According to an eighth aspect, this application provides a network device, including a processor, a memory, and a computer program or instructions stored in the memory, where the processor executes the computer program or instructions to implement the steps in the method designed in the second aspect.

According to a ninth aspect, this application provides a chip, including a processor, where the processor performs the steps in the method designed in the first aspect or the second aspect.

According to a tenth aspect, this application provides a chip module, including a transceiver component and a chip, where the chip includes a processor, and the processor performs the steps in the method designed in the first aspect or the second aspect.

According to an eleventh aspect, this application provides a computer-readable storage medium, where the computer-readable storage medium stores a computer program or instructions that, when executed, cause the steps in the method designed in the first aspect or the second aspect to be implemented.

According to a twelfth aspect, this application provides a computer program product, including a computer program or instructions that, when executed, cause the steps in the method designed in the first aspect or the second aspect to be performed. For example, the computer program product may be a software installation package.

For beneficial effects brought by the technical solutions of the third aspect to the twelfth aspect, refer to the technical effects brought by the technical solutions of the first aspect. Details are not described herein again.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a diagram of a structure of a MAC CE according to an embodiment of this application;
FIG. 4 to FIG. 6 are schematic flowcharts of a CLI measurement method according to an embodiment of this application;
FIG. 7 is a diagram of a structure of another MAC CE according to an embodiment of this application;
FIG. 8 is a schematic flowchart of a CLI measurement reporting method according to an embodiment of this application;
FIG. 9 is a block diagram of composition of a functional unit of a communication apparatus according to an embodiment of this application;
FIG. 10 is a block diagram of composition of a functional unit of another communication apparatus according to an embodiment of this application;
FIG. 11 is a diagram of a structure of a terminal device according to an embodiment of this application; and
FIG. 12 is a diagram of a structure of a network device according to an embodiment of this application.

### DESCRIPTION OF EMBODIMENTS

It should be understood that the terms "first", "second", and the like involved in embodiments of this application are intended to distinguish between different objects, but do not indicate a particular sequence. In addition, the terms "include", "have", and any variant thereof are intended to cover a non-exclusive inclusion. For example, a process, a method, software, a product, or a device that includes a series of steps or units is not limited to the listed steps or units, but may further include an unlisted step or unit, or may further include another inherent step or unit of the process, the method, the product, or the device.

An "embodiment" involved in embodiments of this application means that a particular feature, structure, or characteristic described with reference to the embodiment can be included in at least one embodiment of this application. The phrase shown at various locations in this specification does not necessarily refer to a same embodiment, and is not an independent or optional embodiment exclusive from other embodiments. A person skilled in the art explicitly and implicitly understands that the embodiments described in this specification may be combined with other embodiments.

In embodiments of this application, "at least one" means one or more, and "a plurality of" means two or more.

In embodiments of this application, "and/or" describes an association relationship of associated objects, and indicates that three relationships may exist. For example, A and/or B may indicate the following three cases: Only A exists, both A and B exist, and only B exists. A and B may be singular or plural. The character "/" may indicate an "or" relationship between the associated objects. In addition, the character "/" may represent a division sign. For example, A/B represents dividing A by B.

In embodiments of this application, "at least one of the following" or a similar expression thereof means any combination of these items, including a single item or any combination of a plurality of items. For example, at least one of a, b, or c may represent the following seven cases: a, b, c, a and b, a and c, b and c, or a, b, and c. Each of a, b, and c may be an element, or may be a set including one or more elements.

"Of (of)", "corresponding or relevant (corresponding, relevant)", "corresponding (corresponding)", "associated or related (associated, related)", and "mapped" (mapped) involved in embodiments of this application sometimes may be interchangeably used. It should be noted that, when differences between them are not emphasized, their concepts or meanings are consistent.

In embodiments of this application, "network" may indicate a same concept as expressions such as "system", and a communication system is a communication network.

In embodiments of this application, "connection" means various connection manners such as a direct connection or an indirect connection, to implement communication between devices. This is not specifically limited.

The following describes in detail related contents of technical solutions in embodiments of this application.

The following describes in detail a communication system in the embodiments.

### [Communication system]

The technical solutions in embodiments of this application may be applied to various wireless communication systems, such as a long term evolution (long term evolution, LTE) system, an advanced long term evolution (advanced long term evolution, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial communication network (non-terrestrial networks, NTN) system, a universal mobile telecommunication system (universal mobile telecommunication system, UMTS), a 6th-generation (6th-Generation, 6G) communication system, or another future communication system.

It should be noted that a conventional communication system supports a limited quantity of user connections and is easy to implement. With development of communication technologies, the communication system in this application can not only support a conventional communication system, but also support device-to-device (device to device, D2D) communication, machine-to-machine (machine to machine, M2M) communication, machine-type communication (machine type communication, MTC), vehicle-to-vehicle (vehicle to vehicle, V2V) communication, vehicle-to-everything (vehicle to everything, V2X) communication, narrow-band Internet of Things (narrow band internet of things, NB-IoT) communication, and the like. Therefore, the technical solutions in embodiments of this application may be applied to the foregoing communication systems.

For example, embodiments of this application may be applied to beamforming (beamforming), carrier aggregation (carrier aggregation, CA), dual connectivity (dual connectivity, DC), or standalone (standalone, SA) deployment scenarios, or the like.

For another example, embodiments of this application may be applied to a communication scenario with an unlicensed spectrum. In embodiments of this application, the unlicensed spectrum may also be considered as a shared spectrum. Alternatively, embodiments of this application may be applied to a licensed spectrum. The licensed spectrum may also be considered as an unshared spectrum.

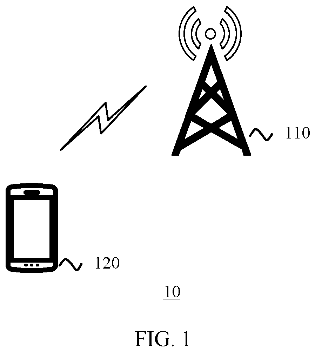

For example, for a network architecture of a communication system in an embodiment of this application, refer to FIG. 1. As shown in FIG. 1, a communication system 10 may include a network device 110 and a terminal device 120. The terminal device 120 may communicate with the network device 110 in a wireless manner.

Certainly, FIG. 1 is merely an example for description of a network architecture of a communication system, and does not constitute a limitation on the network architecture of the communication system in this embodiment of this application. For example, the communication system 10 may further include a server or another device, or the communication system 10 may include another network device in addition to the network device 110, or the communication system 10 may include another terminal device in addition to the terminal device 120.

The following describes the terminal device and the network device mentioned in this embodiment.

### [Terminal device]

The terminal device may be a device with a transceiver function, and may also be referred to as a terminal, user equipment (user equipment, UE), a remote terminal device (remote UE), a relay device (relay UE), an access terminal device, a subscriber unit, a subscriber station, a mobile radio station, a mobile station, a remote station, a mobile device, a user terminal device, an intelligent terminal device, a wireless communication device, a user agent, or a user apparatus. It should be noted that the relay device is a terminal device that can provide relay and forwarding services for another terminal device (including a remote terminal device).

For example, the terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal device in industrial control (industrial control), a wireless terminal device in self-driving, a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like.

For another example, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a vehicle-mounted device, a wearable device, a terminal device in a next-generation communication system (for example, an NR communication system and a 6G communication system), a terminal device in a future evolved public land mobile communication network (public land mobile network, PLMN), or the like. This is not specifically limited.

In addition, the terminal device may be deployed on land, including indoors or outdoors, handheld, wearable or vehicle-mounted; or may be deployed on the water (for example, a ship); or may be deployed in the air (for example, an airplane, a balloon, or a satellite). The terminal device may include an apparatus with a wireless communication function, for example, a chip system, a chip, or a chip module. For example, the chip system may include a chip, or may include another discrete component. The terminal device may be a chip, a chip module, an apparatus, a unit, and the like. This is not specifically limited.

### [Network device]

The network device may be a device with a transceiver function, and may be configured to communicate with the terminal device.

The network device may include an apparatus that provides a wireless communication function for the terminal device, for example, a chip system, a chip, or a chip module. For example, the chip system may include a chip or another discrete component. The network device provides a service for a cell, and a terminal device in the cell may communicate with the network device by using a transmission resource (for example, a spectrum resource). The cell may be a macro cell (macro cell), a small cell (small cell), a metro cell (metro cell), a micro cell (micro cell), a pico cell (pico cell), a femto cell (femto cell), and the like.

In addition, the network device has a mobility feature. For example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geosynchronous orbit (geostationary earth orbit, GEO) satellite, a high elliptical orbit (high elliptical orbit, HEO) satellite, or the like. Optionally, the network device may be a base station disposed on land, in the water, or in other locations.

In some examples, the network device may include an access network device and/or a device in a core network (core network, CN).

The following describes in detail the access network device and the core network device.

### [Access network device]

The access network device may be referred to as a radio access network (radio access network, RAN). The RAN may be a network including a plurality of 5G-RAN nodes for implementing a wireless physical layer function, a resource scheduling and radio resource management function, a radio access control function, and a mobility management function. A 5G-RAN is connected to a UPF via a user plane interface N3 for transmitting data of the terminal device. The 5G-RAN establishes a control plane signaling connection to a mobility management function (access and mobility management function, AMF) via a control plane interface N2 for implementing functions such as radio access bearer control. The RAN may be any device with a wireless transceiver function, including but not limited to a 5G NodeB (5G node base, gNB), an evolved NodeB (evolutional node base, eNB), a wireless access point (wireless access point, WiFi AP), a worldwide interoperability for microwave access base station (world interoperability for microwave access base station, WiMAX BS), a transmission reception point (transmission receiving point, TRP), a wireless relay node, a wireless backhaul node, a master node (master node, MN) in a dual connectivity architecture, a second node or secondary node (secondary node, SN) in a dual connectivity architecture, and the like.

In addition, the access network device may be a device configured to communicate with the terminal device. For example, the access network device may be a base station (base transceiver station, BTS) in a global system for mobile communications (global system of mobile communication, GSM) or code division multiple access (code division multiple access, CDMA), a NodeB (nodeB, NB) in a wideband code division multiple access (wideband code division multiple access, WCDMA) system, an evolved NodeB (evolutional node base, eNB) in an LTE system, or a radio controller in a cloud radio access network (cloud radio access network, CRAN) scenario. Alternatively, the access network device may be a relay station, an access point, a vehicle-mounted device, a wearable device, an access network device in a future 5G network, or an access network device in a future evolved PLMN network, or the like. This is not limited in this embodiment of this application.

In 5G NR, functions of the access network device are divided into two parts. This is referred to as central unit (centralized unit, CU)-distributed unit (distributed unit, DU) separation. From the perspective of a protocol stack, a CU includes a radio resource control (Radio Resource Control, RRC) layer and a packet data convergence protocol (packet data convergence protocol, PDCP) layer, of an LTE base station, while a DU includes a radio link control (radio link control, RLC) layer, a media access control (media access control, MAC) layer, a physical (physical, PHY) layer, and the like, of an LTE base station. In a common 5G NodeB deployment, the CU and the DU may be physically connected by using an optical fiber, and logically, there is a specially defined F1 interface used for communication between the CU and the DU. From the perspective of functions, the CU is mainly responsible for radio resource control and configuration, inter-cell mobility management, bearer management, and the like. The DU is mainly responsible for scheduling and for generating and sending a physical signal.

Optionally, the access network device may be a macro base station, a micro base station, a pico base station, a small station, a relay station, a balloon station, or the like.

### [Core network device]

The core network device may include network elements that provide various functions. The "network element" may also be referred to as an entity, a device, an apparatus, a module, or the like. This is not specifically limited. In addition, for ease of understanding and description, the expression "network element" is omitted in some descriptions. For example, a network exposure function (network exposure function, NEF) network element is referred to as an NEF for short. In this case, the "NEF" should be understood as an NEF network element or an NEF entity. A description of a same or similar situation is omitted.

For example, the core network device may include a mobility management entity (mobility management entity, MME) and a broadcast multicast service center (broadcast multicast service center, BMSC), or may include a corresponding functional entity in a 5G system, for example, a core network control plane (control plane, CP) or user plane (user plan, UP) network function. The core network control plane may also be understood as a control plane function (control plane function, CPF) entity of the core network.

The following describes various network elements included in the core network device.

A session management function (session management function, SMF) may be responsible for control plane functions of session management of the terminal device, including selection and control of a user plane function (user plane function, UPF), internet protocol (internet protocol, IP) address allocation, session QoS management, and obtaining policy and charging control (policy and charging control, PCC) policies, and the like.

The user plane function (user plane function, UPF), as an anchor point of a protocol data unit (protocol data unit, PDU) session connection, may be responsible for data packet filtering, data transmission/forwarding, rate control, and generation of charging information of the terminal device, and provide a connection to a data network (data network, DN).

A policy control function (policy control function, PCF) may provide configuration policy information for the terminal device, provide policy information for managing and controlling the terminal device for a control plane network element (for example, the SMF) of the network, and generate a terminal device access policy and a QoS flow control policy.

An AF may interact with the network elements of the core network to provide some services. For example, the AF interacts with the PCF to perform service policy control, interacts with the NEF to obtain some network capability information or provide some application information for the network and provide some information about a data network access point for the PCF to generate routing information of a corresponding data service.

The NEF may be responsible for providing some network-related status information for an application service.

An authentication server function (Authentication Server Function, AUSF) may implement 3GPP and non-3GPP access authentication.

A unified data management (UDM) function, including 3GPP AKA authentication, user identification, access authorization, registration, mobility, subscription, SMS management, and the like.

A network slice selection function (network slice selection function, NSSF) may determine, based on slice selection assistance information, subscription information, and the like of the terminal device, an instance of a network slice allowed to be accessed by the terminal device.

A network repository function (network repository function, NRF) may be a new function that provides registration and discovery functions, enabling network functions (NFs) to discover and communicate with each other through an API interface.

The unified data management (unified data management, UDM) may be responsible for managing user identities, subscription data, authentication data, registration of serving network elements of users, and the like.

A unified data repository (unified data repository, UDR) may be used by the UDM to store or read subscription data and by the PCF to store or read policy data.

A network data analytics function (network data analytics function, NWDAF) may provide network analytics services based on request data from network services.

A network slice specific authentication and authorization function (network slice specific authentication and authorization function, NSSAAF) may be used to provide authentication and authorization of a specific network slice.

It should be noted that the terminal device is connected to the access network device in a wireless manner, and the access network device is connected to the core network device in a wireless or wired manner. The access network device and the core network device may be different physical devices that are independent of each other, or functions of the core network device and logical functions of the access network device may be integrated into a same physical device, or some functions of the core network device and some functions of the access network device may be integrated into one physical device.

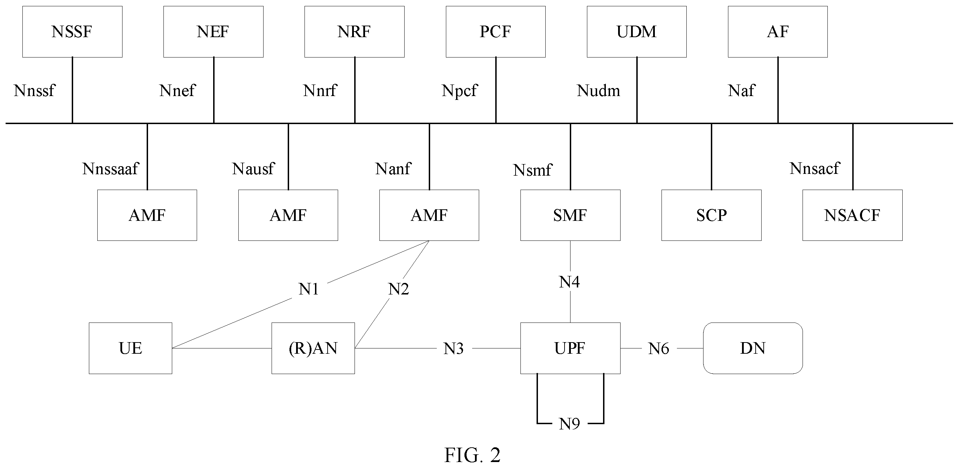

For example, FIG. 2 is a diagram of an architecture of another communication system according to an embodiment of this application. Names of network elements included in FIG. 2 are merely examples, and do not constitute a limitation on functions of the network elements themselves. In a 5G network and another future network, the foregoing network elements may also use other names. This is not specifically limited. For example, in a 6G network, some or all of the foregoing network elements may use 5G terms or other names, or the like. This applies throughout and will not be repeated below.

In addition, the network elements in FIG. 2 do not necessarily exist at the same time, and a required network element may be determined based on a requirement. A connection relationship between the network elements in FIG. 2 is not uniquely determined, and may be adjusted based on a requirement. It may be understood that the foregoing network element or function may be a network element in a hardware device, or may be a software function running on dedicated hardware, or may be a virtualized function instantiated on a platform (for example, a cloud platform).

Certainly, FIG. 2 is merely an example for description of a network architecture of a communication system, and does not constitute a limitation on the network architecture of the communication system in this embodiment of this application.

The communication system has been described above, and CLI measurement reporting in this embodiment is described in detail below.

In a TDD system, transmission directions of all frequency domain resources of one TDD carrier need to be the same at a same moment, that is, either all uplink or all downlink. As a result, uplink-downlink slot configurations of different frequency domain resources on the one TDD carrier cannot be flexibly configured. However, with service diversification, especially considering service requirements of vertical industries, different services have different requirements for uplink and downlink transmission. As a result, a single uplink-downlink slot configuration cannot meet requirements of different services.

To avoid a limitation of the uplink-downlink slot configuration as much as possible, flexibly use limited spectrum resources to dynamically match service requirements, and improve resource utilization efficiency and performance such as uplink coverage and delay of data transmission, 3GPP introduces subband (subband)-based full duplex (full duplex), also referred to as SBFD, so that a same carrier is divided into non-overlapping uplink and downlink subbands in frequency domain. In this way, uplink transmission and downlink transmission can be supported at a same moment, thereby improving spectrum utilization and flexibility.

In an SBFD system, full duplex is adopted on a network device side. That is, uplink transmission and downlink transmission at a same moment may be performed simultaneously at different frequency domain positions. To avoid interference between uplink and downlink, a specific guard band (guard band) may be reserved between frequency domain positions (namely, subbands) corresponding to different transmission directions. Half duplex is adopted on a terminal device side. That is, only uplink transmission or downlink transmission may be performed at a same moment, and the two cannot be performed simultaneously. In this way, in this mode of full duplex on the network device side and half duplex on the terminal device side, the uplink transmission and the downlink transmission on the network device side at the same moment can only be for different terminal devices.

In a TDD system, different TDD uplink-downlink configurations may be configured for neighboring cells, or different terminal devices in a same cell have different TDD uplink-downlink configurations. In this way, an uplink resource configured by a network for a first terminal device in a cell and a downlink resource for a second terminal device in a neighboring cell have a same time-frequency domain position, or an uplink resource configured by a network for a first terminal device in a same cell and a downlink resource for a second terminal device have a same time-frequency domain position. As a result, uplink transmission of the first terminal device may cause interference to downlink reception of the second terminal device. This interference is referred to as cross-link interference (CLI). The CLI in the TDD system may be referred to as full-band CLI (full-band CLI).

In the SBFD system, a same carrier may be divided into different uplink and downlink subbands for neighboring cells, or different terminal devices in a same cell may have different uplink and downlink subbands on a same carrier. In this way, on the same carrier, an uplink subband configured by a network for a first terminal device in a cell and a downlink carrier for a second terminal device in a neighboring cell have a same frequency domain position, or an uplink subband configured by a network for a first terminal device in a same cell and a downlink subband for a second terminal device have a same frequency domain position. As a result, uplink transmission of the first terminal device may cause interference to downlink reception of the second terminal device. This interference is also CLI. The CLI in the SBFD system may be referred to as intra-subband CLI (intra-subband CLI) or inter-subband CLI (inter-subband CLI).

To cope with the CLI in the full duplex mode, in this embodiment, it is considered that the CLI on a specific resource needs to be accurately measured and reported in time, so that the network takes an effective measure to better suppress or resist the CLI; otherwise, a transmitted signal may be incorrectly received.

In addition, in the communication system, different interfaces may define respective protocol stacks, and protocols may be layered (layer), including, for example, layer 1 (layer 1, L1), layer 2 (layer 2, L2), and layer 3 (layer 3, L3). Layer 1 may be a physical layer protocol; layer 2 may be a data link layer and may include a PDCP layer, a radio link control (radio link control, RLC) layer, and/or a MAC layer; and layer 3 may be a network layer and may include an RRC layer.

Based on this, L1/L2-based CLI measurement reporting needs to be performed in this embodiment. The L1/L2-based CLI measurement reporting includes L1/L2-based CLI-received signal strength indicator (CLI-received signal strength indicator, CLI-RSSI) measurement reporting, and L1/L2-based sounding reference signal-reference signal received power (sounding reference signal-reference signal received power, SRS-RSRP) measurement reporting.

For the L1/L2-based CLI-RSSI measurement reporting, in this embodiment, it is considered that a network device may indicate a victim/an interfered party (a terminal device subjected to the CLI) to measure a total received power on a CLI-RSSI measurement resource configured by the network to obtain a CLI-RSSI measurement result. The CLI-RSSI measurement result may include a CLI-RSSI.

Unlike the network device indicating an attacker/interfering party (a terminal device that applies the CLI) to send an SRS signal, and then the victim/interfered party performing RSRP measurement based on the SRS signal sent, for the L1/L2-based SRS-RSRP measurement reporting, in this embodiment, it is considered that the network device indicates an SRS signal to be received and measured by the victim/interfered party, so that the victim/interfered party performs the RSRP measurement based on the indicated SRS signal to obtain an SRS-RSRP measurement result. The SRS-RSRP measurement result may include an SRS-RSRP.

For both the L1/L2-based CLI-RSSI measurement reporting and the SRS-RSRP measurement reporting, the network device configures, for the terminal device, a resource used for CLI measurement, for example, a CLI-RSSI measurement resource or an SRS-RSRP measurement resource. For ease of description, in this embodiment, the "CLI-RSSI measurement resource" and the "SRS-RSRP measurement resource" are collectively referred to as a "CLI measurement resource", and the "CLI-RSSI measurement result" and the "SRS-RSRP measurement result" are collectively referred to as a "CLI measurement result". That is, the CLI measurement resource may include the CLI-RSSI measurement resource or the SRS-RSRP measurement resource, and the CLI measurement result may include the CLI-RSSI measurement result or the SRS-RSRP measurement result.

In addition, the victim/interfered party may send a CLI measurement report to the network device, and the CLI measurement report may include the CLI measurement result, thereby implementing reporting of the CLI measurement result. The reporting of the CLI measurement result may support event-triggering or periodic reporting, or the like.

It can be learned that, to cope with the CLI in the full duplex mode, the network device configures, for the terminal device, the resource used for the CLI measurement, and the terminal device may perform the CLI measurement based on the resource, to obtain the CLI measurement result, and then report the CLI measurement result to the network device. In this way, the network device may perform processing such as related scheduling based on the CLI measurement result, to better suppress or resist the CLI and avoid or mitigate impact of the CLI on performance such as network stability.

In this embodiment, the following specifically describes the L1/L2-based CLI measurement reporting by using the following solutions. These solutions may be associated with each other, or may be independent of each other, and a same content in different solutions may be mutually referenced. Details are not described herein again.

### [Solution 1]

In "solution 1", the following is specifically described: In this embodiment, the CLI measurement resource is first configured by a network, and then a CLI measurement resource used for the CLI measurement is determined from the CLI measurement resource configured by the network.

For example, the network device may configure one or more candidate CLI measurement resources for the terminal device via RRC signaling (that is, a process of configuring the candidate CLI measurement resource), and then determine, from the candidate CLI measurement resource configured via the RRC signaling, the CLI measurement resource used for the CLI measurement via a MAC control element (MAC control element, MAC CE) (that is, a process of determining the CLI measurement resource).

The following specifically describes the process of configuring the candidate CLI measurement resource and the process of determining the CLI measurement resource.

"Process of configuring the candidate CLI measurement resource"

In the process of configuring the candidate CLI measurement resource, the network device may configure the one or more candidate CLI measurement resources for the terminal device based on resource configuration information. In this way, the network may configure the candidate CLI measurement resource based on the resource configuration information.

In some possible examples, the resource configuration information is carried by the RRC signaling.

In this way, the network device may configure the one or more candidate CLI measurement resources for the terminal device via the RRC signaling.

In some possible examples, the resource configuration information includes resource identification information. The resource identification information may be used to configure an identifier (ID) of the one or more candidate CLI measurement resources.

In this way, the network device may configure the identifier of the one or more candidate CLI measurement resources for the terminal device based on the resource identification information, so that the terminal device may learn, based on the identifier of the CLI measurement resource, a CLI measurement resource that can be used.

In some possible examples, the resource configuration information includes time-frequency domain position information, and the time-frequency domain position information may be used to configure a time-frequency domain position of the one or more candidate CLI measurement resources.

In this way, the network device may configure the time-frequency domain position of the one or more candidate CLI measurement resources for the terminal device based on the time-frequency domain position information, so that the terminal device may learn, based on the time-frequency domain position of the CLI measurement resource, a CLI measurement resource that can be used.

It should be noted that the time-frequency domain position of the CLI measurement resource is a specific time-frequency resource configured by the network device for the terminal device for the CLI measurement. A time domain position of the CLI measurement resource is a position of a slot, a subframe, a symbol, or the like that is used by the terminal device for the CLI measurement in time domain. The position in time domain describes when the terminal device should perform a measurement operation. A frequency domain position of the CLI measurement resource is a position of a frequency band, a subcarrier, a resource element (RE), or the like that is used by the terminal device for the CLI measurement in frequency domain. The position in frequency domain describes the frequency band, subcarrier, or RE on which the terminal device should perform a measurement operation.

In some possible examples, the resource configuration information includes SRS sequence information. The SRS sequence information is used to configure a sequence of SRS signals carried by the one or more candidate CLI measurement resources.

It should be noted that, unlike the network device indicating an attacker/interfering party to send an SRS signal, and then the victim/interfered party performing CLI measurement based on the SRS signal sent, in this embodiment, it is considered that the network device may indicate an SRS signal to be received and measured by the victim/interfered party, so that the victim/interfered party performs the CLI measurement based on the indicated SRS signal to obtain a CLI measurement result.

In this way, the network device may indicate, by using the SRS sequence information, an SRS signal to be received and measured by the terminal device, so that the terminal device performs the CLI measurement based on the indicated SRS signal.

The following uses 5G NR as an example to describe the sequence of SRS signals. For an SRS resource of an OFDM symbol *l'* and an SRS antenna port *i,* a sequence of SRS signals carried by the SRS resource is generated according to the following formula: ${r}^{\left({p}_{i}\right)} \left(n,l′\right) = {r}_{u , ν}^{\left({a}_{i}, δ\right)} \left(n\right) ;$ $0 \leq n \leq {M}_{sc , b}^{SRS} - 1 ;$ and $l ′ ∈ \left\{0,1,…, {N}_{symb}^{SRS}-1\right\} .$

The following separately describes meanings of the parameters in the foregoing formula.${M}_{sc , b}^{SRS}$ represents a length of the sequence of SRS signals, and may be defined as: ${M}_{sc , b}^{SRS} = {m}_{SRS , b} {N}_{sc}^{RB} / {K}_{TC} ;$ where ${N}_{sc}^{RB}$ represents a quantity of subcarriers included in one RB; and *K*_{TC} represents a transmission comb number (transmission comb number), and is configured by a higher-layer parameter. For example, *K*_{TC} is configured by transmissionComb.

**Table 1**

| *C*_{SRS} | *B*_{SRS} = 0 | | *B*_{SRS} = 1 | | *B*_{SRS} = 2 | | *B*_{SRS} = 3 | |
|---|---|---|---|---|---|---|---|---|
| | *m*_{SRS,0} | *N*₀ | *m*_{SRS,1} | *N*₁ | *m*_{SRS,2} | *N*₂ | *m*_{SRS,3} | *N*₃ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| ... | ... | ... | ... | ... | ... | ... | ... | ... |

*m*_{SRS,*b*} represents a quantity of physical resource blocks (physical resource block, PRB) for SRS transmission, and is determined by a higher-layer parameter *C*_{SRS} and a higher-layer parameter *B*_{SRS} that are configured by higher-layer signaling, as shown in Table 1. *b* = *B*_{SRS}, where *B*_{SRS} ∈ {0,1,2,3} is given by a field (field) b-SRS in a higher-layer parameter freqHopping; and *C*_{SRS} ∈ {0,1,...,63} is given by a field c-SRS in the higher-layer parameter freqHopping, and *b*ₕₒₚ ∈ {0,1, 2,3} is given by a field b-hop included in the higher-layer parameter freqHopping. *m*_{SRS,0} may represent a total bandwidth of SRS frequency hopping.${r}_{u , ν}^{\left(a, δ\right)} \left(n\right)$ represents a low peak-to-average power ratio pseudo-random sequence (low-PAPR pseudo-random sequences), and may be defined as: ${r}_{u , ν}^{\left(a, δ\right)} \left(n\right) = {e}^{jan} {\overline{r}}_{u , ν} \left(n\right) , 0 \leq n \leq {M}_{ZC} ;$ where ${M}_{ZC} = {mN}_{sc}^{RB} / {2}^{δ}$ represents a length of ${r}_{u , ν}^{\left(a, δ\right)} \left(n\right)$, *α* represents a cyclic shift (cyclic shift), *r̅_{u,ν}*(*n*) represents a basic sequence, *u* ∈ {0,1,...,29} represents a group number (group number), and *ν* represents a basic sequence number of *r̅_{u,ν}*(*n*) in a group, and *δ* = log₂(*K*_{TC}).

*αᵢ* represents a cyclic shift of the SRS antenna port *i* (*pᵢ*), and may be defined as: ${α}_{i} = 2 π \frac{{n}_{SRS}^{cs , i}}{{n}_{SRS}^{cs , max}} ;$ and ${n}_{SRS}^{cs , i} = \left({n}_{SRS}^{cs}+\frac{{n}_{SRS}^{cs , max} \left({p}_{i}-1000\right)}{{N}_{ap}^{SRS}}\right) {modn}_{SRS}^{cs , max} ;$ where ${n}_{SRS}^{cs} ∈ \left\{0,1,…, {n}_{SRS}^{cs , max}-1\right\}$ represents a number of cyclic shifts, and ${n}_{SRS}^{cs}$ is configured by a higher-layer parameter. For example, ${n}_{SRS}^{cs}$ is configured by transmissionComb. ${n}_{SRS}^{cs , max}$ represents a maximum number of cyclic shifts, and a value of ${n}_{SRS}^{cs , max}$ may be determined by a value of *K*_{TC}. For example, when a value range of *K*_{TC} is {2,4,8}, the value of ${n}_{SRS}^{cs , max}$ is given by Table 2.

It should be noted that *K*_{TC} may represent a quantity of SRS antenna ports with a possibility of orthogonal frequency domain, and ${n}_{SRS}^{cs , max}$ may represent a quantity of SRS antenna ports with a possibility of orthogonal code division in code domain. Orthogonality needs to be ensured between different SRS antenna ports or different terminal devices, and ${K}_{TC} ∗ {n}_{SRS}^{cs , max}$ (for example, ${K}_{TC} ∗ {n}_{SRS}^{cs , max} = 8 ∗ 6 = 48$) represents a total quantity of orthogonal antenna ports that can be accommodated.

**Table 2**

| *K*_{TC} | ${n}_{SRS}^{cs , max}$ |
|---|---|
| 2 | 8 |
| 4 | 12 |
| 8 | 6 |

### "Process of determining the CLI measurement resource"

After the network configures the one or more candidate CLI measurement resources, the network device may indicate an activated (activation) or deactivated (deactivation) state of each of the one or more candidate CLI measurement resources to the terminal device by using indication information. In this way, the terminal device performs CLI measurement based on one or more activated CLI measurement resources.

Activation of the CLI measurement resource may be understood as the network device notifying, via the MAC CE, the terminal device to perform the CLI measurement by using the activated CLI measurement resource. In this way, after the terminal device receives an activation configuration, the terminal device may perform, according to a network configuration requirement, a corresponding CLI measurement operation at a time-frequency domain position in which the activated CLI measurement resource is located, and report a related measurement result.

Deactivation of the CLI measurement resource may be understood as the network device notifying, via the MAC CE, the terminal device not to perform the CLI measurement by using a deactivated CLI measurement resource. In this way, after the terminal device receives a deactivation configuration, the terminal device stops the corresponding CLI measurement operation and does not report the related measurement result.

It can be learned that by activating or deactivating the CLI measurement resource, the network device may flexibly control a CLI measurement behavior of the terminal device as required, thereby effectively managing network resources and avoiding resource waste caused by excessive CLI measurement tasks. In addition, the network device may dynamically adjust the activated or deactivated state of the CLI measurement resource according to real-time network conditions and requirements, to obtain accurate network performance information and perform corresponding network optimization.

In some possible examples, the indication information may be carried by the MAC CE. In this way, the network device may indicate the activated or deactivated state of each candidate CLI measurement resource to the terminal device via the MAC CE.

In some possible examples, the indication information may include a bitmap (bitmap). In this way, the network device may indicate the activated or deactivated state of each candidate CLI measurement resource to the terminal device by using the bitmap.

It should be noted that each bit in the bitmap is in a one-to-one correspondence to each candidate CLI measurement resource. That is, a quantity of bits in the bitmap is the same as a quantity of candidate CLI measurement resources configured by the network. For example, if eight candidate CLI measurement resources are configured for the RRC signaling, the quantity of bits in the bitmap is 8.

Each bit in the bitmap may be used to indicate an activated or deactivated state of a candidate CLI measurement resource corresponding to the bit.

For example, if a value of the bit is 1, the candidate CLI measurement resource corresponding to the bit is in the activated state; and if a value of the bit is 0, the candidate CLI measurement resource corresponding to the bit is in the deactivated state. On the contrary, if a value of the bit is 1, the candidate CLI measurement resource corresponding to the bit is in the deactivated state; and if a value of the bit is 0, the candidate CLI measurement resource corresponding to the bit is in the activated state.

In some possible examples, the indication information may include one or more pieces of identification information. In this way, the network device may indicate the activated or deactivated state of each candidate CLI measurement resource to the terminal device by using the one or more pieces of identification information.

It should be noted that each of the one or more pieces of identification information is in a one-to-one correspondence to each of the one or more candidate CLI measurement resources. That is, an amount of identification information is the same as a quantity of candidate CLI measurement resources configured by the network.

Each piece of identification information may be used to indicate an activated or deactivated state of a candidate CLI measurement resource corresponding to the identification information. For example, if the identification information is a first value, the candidate CLI measurement resource corresponding to the identification information is in the activated state; and if the identification information is a second value, the candidate CLI measurement resource corresponding to the identification information is in the deactivated state.

In some possible examples, the indication information may include one or more fields of the MAC CE. In this way, the network device may indicate the activated or deactivated state of each candidate CLI measurement resource to the terminal device via the MAC CE.

It should be noted that each of the one or more fields is in a one-to-one correspondence to each of the one or more candidate CLI measurement resources. That is, a quantity of fields is the same as a quantity of candidate CLI measurement resources configured by the network.

Each field may be used to indicate an activated or deactivated state of a candidate CLI measurement resource corresponding to the field.

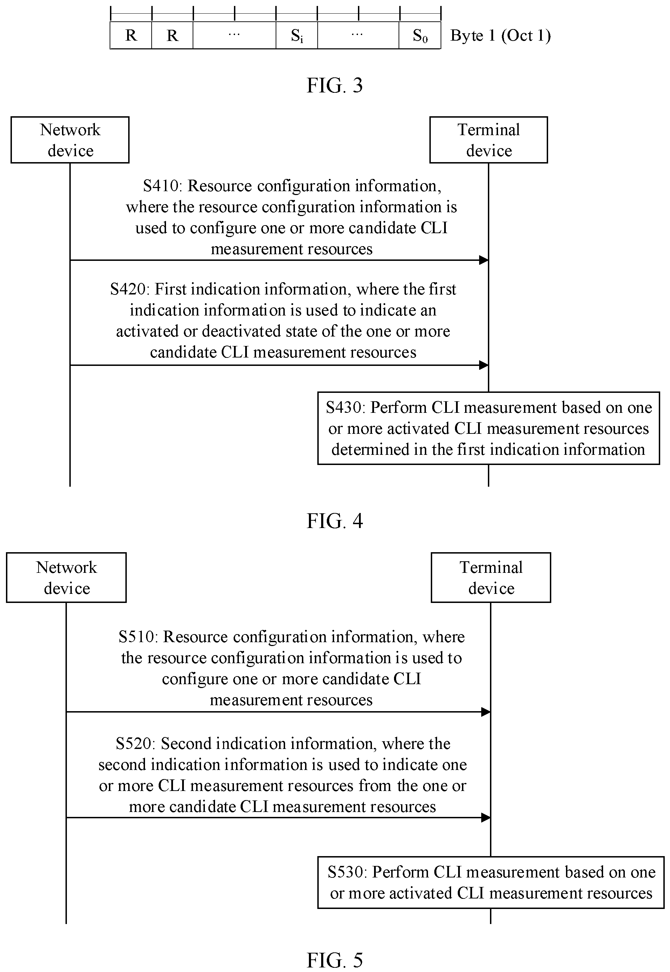

For example, as shown in FIG. 3, the MAC CE is identified by a MAC subheader, and a logical channel identifier (logical channel ID, LCID) of the MAC CE is a specific value. The MAC CE includes the following fields (fields):

Sᵢ field: The field may be used to indicate an activated or deactivated state of the i^{th} (i=0, 1, ..., M-1) candidate CLI measurement resource, and a length of the field is 1 bit, where M represents a quantity of candidate CLI measurement resources; when Sᵢ is 1, it indicates that the i^{th} candidate CLI measurement resource is in the activated state; and when Sᵢ is 0, it indicates that the i^{th} candidate CLI measurement resource is in the deactivated state.

R field: The field is reserved.

Certainly, FIG. 3 is merely an example for description of a structure of the MAC CE, and this embodiment does not limit the structure of the MAC CE.

The following describes "solution 1" by way of example with interaction between the network device and the terminal device as an example, as shown in FIG. 4. FIG. 4 is a schematic flowchart of a CLI measurement method according to an embodiment of this application. In FIG. 4, the method includes the following steps:
S410: The network device sends resource configuration information, where the resource configuration information is used to configure one or more candidate CLI measurement resources.

Correspondingly, the terminal device receives the resource configuration information.

S420: The network device sends first indication information, where the first indication information is used to indicate an activated or deactivated state of the one or more candidate CLI measurement resources.

Correspondingly, the terminal device receives the first indication information.

S430: The terminal device performs CLI measurement based on one or more activated CLI measurement resources determined in the first indication information.

It can be learned that the network device may configure the one or more candidate CLI measurement resources based on the resource configuration information, and then indicate an activated or deactivated state of each candidate CLI measurement resource by using the first indication information, to determine the CLI measurement resource used for the CLI measurement. In this way, the terminal device may perform the CLI measurement based on the one or more activated CLI measurement resources to obtain a CLI measurement result.

In some possible examples, the resource configuration information includes at least one of the following: first resource identification information, time-frequency domain position information, or SRS sequence information; the first resource identification information is used to configure an ID of the one or more candidate CLI measurement resources; the time-frequency domain position information is used to configure a time-frequency domain position of the one or more candidate CLI measurement resources; and the SRS sequence information is used to configure a sequence of SRS signals carried by the one or more candidate CLI measurement resources.

In this way, the network device may implement a network configuration of the ID of the one or more candidate CLI measurement resources based on the first resource identification information, so that the terminal device may learn, based on the identifier of the CLI measurement resource, a CLI measurement resource that can be used.

The network device may implement the time-frequency domain position of the one or more candidate CLI measurement resources of the network device by using the time-frequency domain position information, so that the terminal device may learn, based on the time-frequency domain position of the CLI measurement resource, a CLI measurement resource that can be used.

The network device may indicate, by using the SRS sequence information, an SRS signal to be received and measured by the terminal device, so that the terminal device performs the CLI measurement based on the indicated SRS signal.

In some possible examples, the first indication information includes a bitmap, and each bit in the bitmap is in a one-to-one correspondence to each of the one or more candidate CLI measurement resources; and each bit in the bitmap is used to indicate an activated or deactivated state of a candidate CLI measurement resource corresponding to the bit.

In this way, the activated or deactivated state of the candidate CLI measurement resource is indicated by using the bitmap.

In some possible examples, the first indication information includes one or more pieces of identification information and each of the one or more pieces of identification information is in a one-to-one correspondence to each of the one or more candidate CLI measurement resources; and each of the one or more pieces of identification information is used to indicate an activated or deactivated state of a candidate CLI measurement resource corresponding to the identification information.

In this way, the activated or deactivated state of the candidate CLI measurement resource is indicated by using the identification information.

In some possible examples, the resource configuration information is carried by RRC signaling, and the first indication information is carried by a MAC CE.

In this way, in this embodiment, the one or more candidate CLI measurement resources are first configured by a network via the RRC signaling, and then the activated or deactivated state of each candidate CLI measurement resource is indicated via the MAC CE, to determine the CLI measurement resource used for the CLI measurement.

### [Solution 2]

In "solution 2", in this embodiment, the CLI measurement resource is configured by a network, and a CLI measurement resource used for the CLI measurement is determined from the CLI resource configured by the network. Different from the foregoing "solution 1", in "solution 2", signaling different from that in "solution 1" may be used in a process of configuring a candidate CLI measurement resource and a process of determining the CLI measurement resource.

For example, the network device may configure one or more candidate CLI measurement resources for the terminal device via RRC signaling, and then determine, based on downlink control information (downlink control information, DCI), the CLI measurement resource used for the CLI measurement from the candidate CLI measurement resource configured via the RRC signaling.

For another example, the network device may configure one or more candidate CLI measurement resources for the terminal device via a MAC CE, and then determine, based on DCI, the CLI measurement resource used for the CLI measurement from the candidate CLI measurement resource configured via the MAC CE.

The following specifically describes the process of configuring the candidate CLI measurement resource and the process of determining the CLI measurement resource.

"Process of configuring the candidate CLI measurement resource"

In the process of configuring the candidate CLI measurement resource, the network device may configure the one or more candidate CLI measurement resources for the terminal device based on resource configuration information. In this way, the network may configure the candidate CLI measurement resource based on the resource configuration information.

In some possible examples, the resource configuration information is carried by the RRC signaling.

In this way, the network device may configure the one or more candidate CLI measurement resources for the terminal device via the RRC signaling.

In some possible examples, the resource configuration information is carried by the MAC CE.

In this way, because the MAC CE signaling is L1/L2 signaling, CLI measurement based on L1/L2 may be performed in this embodiment.

In some possible examples, the resource configuration information includes resource identification information. The resource identification information may be used to configure an identifier (ID) of the one or more candidate CLI measurement resources.

In this way, the network device may configure the identifier of the one or more candidate CLI measurement resources for the terminal device based on the resource identification information, so that the terminal device may learn, based on the identifier of the CLI measurement resource, a CLI measurement resource that can be used.

In some possible examples, the resource configuration information includes time-frequency domain position information, and the time-frequency domain position information may be used to configure a time-frequency domain position of the one or more candidate CLI measurement resources.

In this way, the network device may configure the time-frequency domain position of the one or more candidate CLI measurement resources for the terminal device based on the time-frequency domain position information, so that the terminal device may learn, based on the time-frequency domain position of the CLI measurement resource, a CLI measurement resource that can be used.

In some possible examples, the resource configuration information includes SRS sequence information. The SRS sequence information is used to configure a sequence of SRS signals carried by the one or more candidate CLI measurement resources.

In this way, the network device may indicate, by using the SRS sequence information, an SRS signal to be received and measured by the terminal device, so that the terminal device performs the CLI measurement based on the indicated SRS signal.

### "Process of determining the CLI measurement resource"

In the process of determining the CLI measurement resource, after the network configures the one or more candidate CLI measurement resources, the network device may indicate one or more CLI measurement resources from the one or more candidate CLI measurement resources to the terminal device by using indication information, to determine the CLI measurement resource used for the CLI measurement. In this way, the terminal device may perform the CLI measurement based on the one or more CLI measurement resources to obtain a CLI measurement result.

In some possible examples, the indication information may be a resource indication field corresponding to one or more terminal devices in group DCI (group DCI). In this way, the CLI measurement resource used for the CLI measurement is indicated from the one or more candidate CLI measurement resources by using the resource indication field in the group DCI. The following describes the group DCI in detail.

### [group DCI]

It should be noted that the group DCI may be used to schedule one terminal device group, and the one terminal device group may be a combination of the one or more terminal devices, so that joint scheduling and resource allocation are performed on the one or more terminal devices based on the group DCI, to improve system efficiency. In this way, each terminal device in the one terminal device group may determine its own DCI from the group DCI based on its device identifier.

The group DCI may include the resource indication field corresponding to the one or more terminal devices. A structure of the resource indication field corresponding to the one or more terminal devices in the group DCI may specifically adopt the following multiple manners:

### Manner 1:

In "manner 1", each terminal device corresponds to one resource indication field, the one resource indication field may be used to indicate one CLI measurement resource from the one or more candidate CLI measurement resources, and the one resource indication field corresponds to one CLI measurement resource ID. Different resource indication fields correspond to different CLI measurement resource IDs.

For example, if a value of the one resource indication field is 0, the resource indication field corresponds to {1}, where {1} represents a CLI measurement resource whose CLI measurement resource ID is 1.

In this way, each terminal device in the terminal device group may determine the one resource indication field corresponding to the terminal device from the group DCI based on its terminal device identifier, then determine one CLI measurement resource from the one or more candidate CLI measurement resources based on the one resource indication field, and finally perform the CLI measurement based on the one CLI measurement resource.

For example, a format of the group DCI is {terminal device identifier 1, resource indication field 1; terminal device identifier 2, resource indication field 2; terminal device identifier 3, resource indication field 3; ...}. The terminal device identifier 1 corresponds to the resource indication field 1, the terminal device identifier 2 corresponds to the resource indication field 2, and the terminal device identifier 3 corresponds to the resource indication field 3, and so on.

In this way, after a terminal device having the terminal device identifier 1 receives the group DCI, the terminal device may obtain the resource indication field 1 based on the terminal device identifier 1, then determine one CLI measurement resource from the one or more candidate CLI measurement resources based on the resource indication field 1, and finally perform the CLI measurement based on the one CLI measurement resource.

### Manner 2:

In "manner 2", each terminal device corresponds to one resource indication field, the one resource indication field may be used to indicate a plurality of CLI measurement resources from the one or more candidate CLI measurement resources, and the one resource indication field corresponds to one CLI measurement resource combination ID. A CLI measurement resource combination may be a combination of the plurality of CLI measurement resources, and different resource indication fields may correspond to different CLI measurement resource combination IDs.

For example, if a value of the one resource indication field is 0, the resource indication field corresponds to {1,2}, where {1,2} represents a combination of a CLI measurement resource whose CLI measurement resource ID is 1 and a CLI measurement resource whose CLI measurement resource ID is 2.

In this way, each terminal device in the terminal device group may determine the one resource indication field corresponding to the terminal device from the group DCI based on its terminal device identifier, then determine a plurality of CLI measurement resources from the one or more candidate CLI measurement resources based on the one resource indication field, and finally perform the CLI measurement based on the plurality of CLI measurement resources.

For example, a format of the group DCI is {terminal device identifier 1, resource indication field 1; terminal device identifier 2, resource indication field 2; terminal device identifier 3, resource indication field 3; ...}. The terminal device identifier 1 corresponds to the resource indication field 1, the terminal device identifier 2 corresponds to the resource indication field 2, and the terminal device identifier 3 corresponds to the resource indication field 3, and so on.

In this way, after a terminal device having the terminal device identifier 1 receives the group DCI, the terminal device may obtain the resource indication field 1 based on the terminal device identifier 1, then determine a plurality of CLI measurement resources from the one or more candidate CLI measurement resources based on the resource indication field 1, and finally perform the CLI measurement based on the plurality of CLI measurement resources.

### Manner 3:

In "manner 3", each terminal device corresponds to one resource indication field, and a plurality of terminal devices jointly correspond to a same resource indication field, the one resource indication field may be used to indicate one CLI measurement resource from the one or more candidate CLI measurement resources, and the one resource indication field corresponds to one CLI measurement resource ID. Different resource indication fields may correspond to different CLI measurement resource IDs.

For example, a format of the group DCI is {terminal device identifier 1, resource indication field 1; terminal device identifier 2, resource indication field 1; terminal device identifier 3, resource indication field 2; terminal device identifier 4, resource indication field 2; ...}. The terminal device identifier 1 and the terminal device identifier 1 jointly correspond to the resource indication field 1, the terminal device identifier 3 and the terminal device identifier 4 jointly correspond to the resource indication field 2, and so on.

In this way, after a terminal device having the terminal device identifier 3 receives the group DCI, the terminal device may obtain the resource indication field 2 based on the terminal device identifier 3, then determine one CLI measurement resource from the one or more candidate CLI measurement resources based on the resource indication field 2, and finally perform the CLI measurement based on the one CLI measurement resource.

### Manner 4:

In "manner 4", each terminal device corresponds to one resource indication field, and a plurality of terminal devices correspond to a same resource indication field, the one resource indication field may be used to indicate a plurality of CLI measurement resources from the one or more candidate CLI measurement resources, and the one resource indication field corresponds to one CLI measurement resource combination ID. Different resource indication fields may correspond to different CLI measurement resource IDs.

For example, a format of the group DCI is {terminal device identifier 1, resource indication field 1; terminal device identifier 2, resource indication field 1; terminal device identifier 3, resource indication field 2; terminal device identifier 4, resource indication field 2; ...}. The terminal device identifier 1 and the terminal device identifier 1 jointly correspond to the resource indication field 1, the terminal device identifier 3 and the terminal device identifier 4 jointly correspond to the resource indication field 2, and so on.

In this way, after a terminal device having the terminal device identifier 3 receives the group DCI, the terminal device may obtain the resource indication field 3 based on the terminal device identifier 3, then determine a plurality of CLI measurement resources from the one or more candidate CLI measurement resources based on the resource indication field 3, and finally perform the CLI measurement based on the plurality of CLI measurement resources.

### Manner 5:

In "manner 5", each terminal device corresponds to a plurality of resource indication fields, each resource indication field may be used to indicate one CLI measurement resource from the one or more candidate CLI measurement resources, and each resource indication field corresponds to one CLI measurement resource ID. Different resource indication fields may correspond to different CLI measurement resource IDs.

In this way, each terminal device in the terminal device group may determine the plurality of resource indication fields corresponding to the terminal device from the group DCI based on its terminal device identifier, then determine a plurality of CLI measurement resources from the one or more candidate CLI measurement resources based on the plurality of resource indication fields, and finally perform the CLI measurement based on the plurality of CLI measurement resources.

For example, a format of the group DCI is {terminal device identifier 1, resource indication field 1_1, resource indication field 1_2, ..., resource indication field 1_m; terminal device identifier 2, resource indication field 2_1, resource indication field 2_2, ..., resource indication field 1_n; ...}. A value of m may be equal to a value of n. The terminal device identifier 1 corresponds to m resource indication fields, and the terminal device identifier 2 corresponds to n resource indication fields.

In this way, when a terminal device having the terminal device identifier 1 receives the group DCI, the terminal device may obtain the m resource indication fields based on the terminal device identifier 1, then determine m CLI measurement resources from the one or more candidate CLI measurement resources based on the m resource indication fields, and finally perform the CLI measurement based on the m CLI measurement resources.

### Manner 6:

In "manner 6", each terminal device corresponds to a plurality of resource indication fields, and a plurality of terminal devices correspond to a same resource indication field. Each resource indication field may be used to indicate one CLI measurement resource from the one or more candidate CLI measurement resources, and each resource indication field corresponds to one CLI measurement resource ID. Different resource indication fields may correspond to different CLI measurement resource IDs.

For example, a format of the group DCI is {terminal device identifier 1, resource indication field 1_1, resource indication field 1_2; terminal device identifier 2, resource indication field 1_1, resource indication field 2_1}. The terminal device identifier 1 and the terminal device identifier 2 jointly correspond to the resource indication field 1_1.

In this way, when a terminal device having the terminal device identifier 1 receives the group DCI, the terminal device may obtain the resource indication field 1_1 and the resource indication field 1_2 based on the terminal device identifier 1, then determine two CLI measurement resources from the one or more candidate CLI measurement resources based on the resource indication field 1_1 and the resource indication field 1_2, and finally perform the CLI measurement based on the two CLI measurement resources.

In some possible examples, the indication information may be a dedicated field or an existing field in terminal device-specific DCI (UE specific DCI). In this way, the CLI measurement resource used for the CLI measurement is indicated from the one or more candidate CLI measurement resources by using the dedicated field or the existing field in the UE specific DCI.

### [UE specific DCI]

It should be noted that the UE specific DCI is applicable to scheduling a single specific terminal device.

The dedicated field in the UE specific DCI may be a new field added to an existing format of the UE specific DCI, and the field may be specifically used to indicate the CLI measurement resource used for the CLI measurement. For example, the dedicated field is used to indicate one or more CLI measurement resources from the one or more candidate CLI measurement resources, and a value of the dedicated field corresponds to one CLI measurement resource ID or one CLI measurement resource combination ID. In this way, when the UE specific DCI is scheduled, the one or more CLI measurement resources are indicated from the one or more candidate CLI measurement resources by using the dedicated field.

The existing field in the UE specific DCI may be a field that already exists and is used in an existing format of the UE specific DCI, for example, a modulation and coding scheme (modulation and coding scheme, MCS) field, a channel state information reference signal (channel state information reference signal, CSI-RS) trigger (trigger) field, and the like. Therefore, in this embodiment, the existing field may be reused to indicate the CLI measurement resource used for the CLI measurement. For example, the existing field is used to indicate one or more CLI measurement resources from the one or more candidate CLI measurement resources, and a specific value of the existing field corresponds to one CLI measurement resource ID or one CLI measurement resource combination ID. In this way, when the UE specific DCI is scheduled, the one or more CLI measurement resources are indicated from the one or more candidate CLI measurement resources by using the existing field.

The following describes "solution 2" by way of example with interaction between the network device and the terminal device as an example, as shown in FIG. 5. FIG. 5 is a schematic flowchart of another CLI measurement method according to an embodiment of this application. In FIG. 5, the method includes the following steps:

S510: The network device sends resource configuration information, where the resource configuration information is used to configure one or more candidate CLI measurement resources.

Correspondingly, the terminal device receives the resource configuration information.

S520: The network device sends second indication information, where the second indication information is used to indicate one or more CLI measurement resources from the one or more candidate CLI measurement resources.

Correspondingly, the terminal device receives the second indication information.

S530: The terminal device performs CLI measurement based on the one or more CLI measurement resources.

It can be learned that the network device may configure the one or more candidate CLI measurement resources based on the resource configuration information, and then indicate the one or more CLI measurement resources from the one or more candidate CLI measurement resources by using the second indication information, to determine the CLI measurement resource used for the CLI measurement. In this way, the terminal device may perform the CLI measurement based on the one or more CLI measurement resources to obtain a CLI measurement result.

In some possible examples, the resource configuration information includes at least one of the following: first resource identification information, time-frequency domain position information, or SRS sequence information; the first resource identification information is used to configure an ID of the one or more candidate CLI measurement resources; the time-frequency domain position information is used to configure a time-frequency domain position of the one or more candidate CLI measurement resources; and the SRS sequence information is used to configure a sequence of SRS signals carried by the one or more candidate CLI measurement resources.

In this way, the network device may implement a network configuration of the ID of the one or more candidate CLI measurement resources based on the first resource identification information, so that the terminal device may learn, based on the identifier of the CLI measurement resource, a CLI measurement resource that can be used.

The network device may implement the time-frequency domain position of the one or more candidate CLI measurement resources of the network device based on the time-frequency domain position information, so that the terminal device may learn, based on the time-frequency domain position of the CLI measurement resource, a CLI measurement resource that can be used.

The network device may indicate, by using the SRS sequence information, an SRS signal to be received and measured by the terminal device, so that the terminal device performs the CLI measurement based on the indicated SRS signal.

In some possible examples, the resource configuration information is carried by the RRC signaling, and the second indication information is carried by the group DCI or the UE specific DCI.

In this way, in this embodiment, the one or more candidate CLI measurement resources are first configured by a network via the RRC signaling, and then the one or more CLI measurement resources are indicated by using the group DCI or the UE specific DCI, to determine the CLI measurement resource used for the CLI measurement.

In some possible examples, the resource configuration information is carried by the MAC CE, and the second indication information is carried by the group DCI or the UE specific DCI.

In this way, in this embodiment, the one or more candidate CLI measurement resources are first configured by a network via the MAC CE, and then the one or more CLI measurement resources are indicated by using the group DCI or the UE specific DCI, to determine the CLI measurement resource used for the CLI measurement.

In some possible examples, the second indication information is a resource indication field corresponding to one or more terminal devices in the group DCI;
each terminal device corresponds to one resource indication field, or a plurality of terminal devices jointly correspond to a same resource indication field;
the one resource indication field is used to indicate one CLI measurement resource from the one or more candidate CLI measurement resources, and a value of the one resource indication field corresponds to one CLI measurement resource identifier ID; or
the one resource indication field is used to indicate a plurality of CLI measurement resources from the one or more candidate CLI measurement resources, and a value of the one resource indication field corresponds to one CLI measurement resource combination ID.

In this way, the terminal device may determine the one resource indication field corresponding to the terminal device from the group DCI based on its own terminal device identifier, then determine one or more CLI measurement resources from the one or more candidate CLI measurement resources based on the one resource indication field, and finally perform the CLI measurement based on the one or more CLI measurement resources.

In some possible examples, the second indication information is a resource indication field corresponding to one or more terminal devices in the group DCI;
each terminal device corresponds to a plurality of resource indication fields, or a plurality of terminal devices jointly correspond to a same resource indication field; and
each resource indication field is used to indicate one CLI measurement resource from the one or more candidate CLI measurement resources, and a value of each resource indication field corresponds to one CLI measurement resource ID.

In this way, the terminal device may determine the plurality of resource indication fields corresponding to the terminal device from the group DCI based on its own terminal device identifier, then determine one or more CLI measurement resources from the one or more candidate CLI measurement resources based on the plurality of resource indication fields, and finally perform the CLI measurement based on the one or more CLI measurement resources.

In some possible examples, the second indication information is a dedicated field or an existing field in the UE specific DCI.

The dedicated field is used to indicate one or more CLI measurement resources from the one or more candidate CLI measurement resources, and a value of the dedicated field corresponds to one CLI measurement resource ID or one CLI measurement resource combination ID; or
the existing field is used to indicate one or more CLI measurement resources from the one or more candidate CLI measurement resources, and a specific value of the existing field corresponds to one CLI measurement resource ID or one CLI measurement resource combination ID.

In this way, the CLI measurement resource used for the CLI measurement is indicated from the one or more candidate CLI measurement resources by using the dedicated field or the existing field in the UE specific DCI.

### [Solution 3]

In "solution 3", in this embodiment, the CLI measurement resource is configured by a network, and a CLI measurement resource used for the CLI measurement is determined from the CLI resource configured by the network. Different from the foregoing "solution 1" or "solution 2", in "solution 3", signaling different from that in "solution 1" or "solution 2" may be used in a process of configuring a candidate CLI measurement resource and a process of determining the CLI measurement resource.

For example, the network device may configure one or more candidate CLI measurement resources for the terminal device via RRC signaling, then determine, via a MAC CE, one or more activated CLI measurement resources from the candidate CLI measurement resource configured via the RRC signaling, and finally determine, based on DCI, the CLI measurement resource used for the CLI measurement from the activated CLI measurement resource determined via the MAC CE.

The following specifically describes the process of configuring the candidate CLI measurement resource and the process of determining the CLI measurement resource.

### "Process of configuring the candidate CLI measurement resource"

In the process of configuring the candidate CLI measurement resource, the network device may configure the one or more candidate CLI measurement resources for the terminal device based on resource configuration information. In this way, the network may configure the candidate CLI measurement resource based on the resource configuration information.

In some possible examples, the resource configuration information is carried by the RRC signaling.

In this way, the network device may configure the one or more candidate CLI measurement resources for the terminal device via the RRC signaling.

In some possible examples, the resource configuration information is carried by the MAC CE.

In this way, because the MAC CE signaling is L1/L2 signaling, CLI measurement based on L1/L2 may be performed in this embodiment.

In some possible examples, the resource configuration information includes resource identification information. The resource identification information may be used to configure an identifier (ID) of the one or more candidate CLI measurement resources.

In this way, the network device may configure the identifier of the one or more candidate CLI measurement resources for the terminal device based on the resource identification information, so that the terminal device may learn, based on the identifier of the CLI measurement resource, a CLI measurement resource that can be used.

In some possible examples, the resource configuration information includes time-frequency domain position information, and the time-frequency domain position information may be used to configure a time-frequency domain position of the one or more candidate CLI measurement resources.

In this way, the network device may configure the time-frequency domain position of the one or more candidate CLI measurement resources for the terminal device based on the time-frequency domain position information, so that the terminal device may learn, based on the time-frequency domain position of the CLI measurement resource, a CLI measurement resource that can be used.

In some possible examples, the resource configuration information includes SRS sequence information. The SRS sequence information is used to configure a sequence of SRS signals carried by the one or more candidate CLI measurement resources.

In this way, the network device may indicate, via the RRC signaling, an SRS signal to be received and measured by the terminal device, so that the terminal device performs the CLI measurement based on the indicated SRS signal.

### "Process of determining the CLI measurement resource"

After the network configures the one or more candidate CLI measurement resources, the network device may indicate an activated or deactivated state of each of the one or more candidate CLI measurement resources to the terminal device by using particular indication information, to determine the one or more activated CLI measurement resources based on the indication information.

In some possible examples, the indication information may be carried by the MAC CE. In this way, the network device may indicate the activated or deactivated state of each candidate CLI measurement resource to the terminal device via the MAC CE.

In some possible examples, the indication information may include a bitmap. Each bit in the bitmap is in a one-to-one correspondence to each candidate CLI measurement resource. Each bit in the bitmap may be used to indicate an activated or deactivated state of a candidate CLI measurement resource corresponding to the bit. In this way, the network device may indicate the activated or deactivated state of each candidate CLI measurement resource to the terminal device by using the bitmap.

In some possible examples, the indication information may include one or more pieces of identification information. Each of the one or more pieces of identification information is in a one-to-one correspondence to each of the one or more candidate CLI measurement resources. Each piece of identification information may be used to indicate an activated or deactivated state of a candidate CLI measurement resource corresponding to the identification information. In this way, the network device may indicate the activated or deactivated state of each candidate CLI measurement resource to the terminal device by using the one or more pieces of identification information.

In some possible examples, the indication information may include one or more fields of the MAC CE. Each of the one or more fields is in a one-to-one correspondence to each of the one or more candidate CLI measurement resources. Each field may be used to indicate an activated or deactivated state of a candidate CLI measurement resource corresponding to the field. In this way, the network device may indicate the activated or deactivated state of each candidate CLI measurement resource to the terminal device via the MAC CE.

Then, the network device may indicate one or more CLI measurement resources from the one or more activated CLI measurement resources to the terminal device by using extra indication information, to determine the CLI measurement resource used for the CLI measurement. In this way, the terminal device may perform the CLI measurement based on the one or more CLI measurement resources to obtain a CLI measurement result.

In some possible examples, the extra indication information may be a resource indication field corresponding to one or more terminal devices in group DCI. Each terminal device corresponds to one resource indication field, or a plurality of terminal devices share one resource indication field; and the one resource indication field is used to indicate one CLI measurement resource from the one or more activated CLI measurement resources, and a value of the one resource indication field corresponds to one CLI measurement resource ID.

In this way, the one CLI measurement resource used for the CLI measurement is indicated from the one or more activated CLI measurement resources by using the resource indication field in the group DCI.

In some possible examples, the extra indication information may be a resource indication field corresponding to one or more terminal devices in group DCI. Each terminal device corresponds to one resource indication field, or a plurality of terminal devices share one resource indication field; and the one resource indication field is used to indicate a plurality of CLI measurement resources from the one or more activated CLI measurement resources, and a value of the one resource indication field corresponds to one CLI measurement resource combination ID.

In this way, the plurality of CLI measurement resources used for the CLI measurement are indicated from the one or more activated CLI measurement resources by using the resource indication field in the group DCI.

In some possible examples, the extra indication information may be a resource indication field corresponding to one or more terminal devices in group DCI. Each terminal device corresponds to a plurality of resource indication fields, or a plurality of terminal devices share one resource indication field; and each resource indication field is used to indicate one CLI measurement resource from the one or more activated CLI measurement resources, and a value of each resource indication field corresponds to one CLI measurement resource ID.

In this way, one or more CLI measurement resources used for the CLI measurement are indicated from the one or more activated CLI measurement resources by using the resource indication field in the group DCI.

In some possible examples, the extra indication information may be a dedicated field in UE specific DCI; and the dedicated field is used to indicate one or more CLI measurement resources from the one or more activated CLI measurement resources, and a value of the dedicated field corresponds to one CLI measurement resource ID or one CLI measurement resource combination ID.

In this way, the one or more CLI measurement resources are indicated from the one or more activated CLI measurement resources by using the dedicated field in the UE specific DCI.

In some possible examples, the extra indication information may be an existing field in UE specific DCI; and the existing field is used to indicate one or more CLI measurement resources from the one or more activated CLI measurement resources, and a specific value of the existing field corresponds to one CLI measurement resource ID or one CLI measurement resource combination ID.

In this way, the one or more CLI measurement resources are indicated from the one or more activated CLI measurement resources by using the existing field in the UE specific DCI.

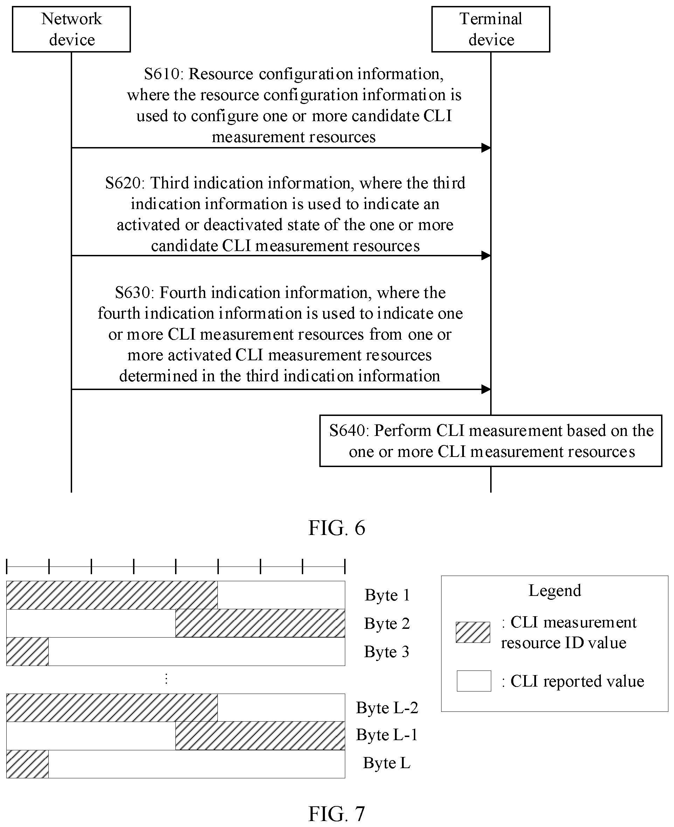

The following describes "solution 3" by way of example with interaction between the network device and the terminal device as an example, as shown in FIG. 6. FIG. 6 is a schematic flowchart of another CLI measurement method according to an embodiment of this application. In FIG. 6, the method includes the following steps:
S610: The network device sends resource configuration information, where the resource configuration information is used to configure one or more candidate CLI measurement resources.

Correspondingly, the terminal device receives the resource configuration information.

S620: The network device sends third indication information, where the third indication information is used to indicate an activated or deactivated state of the one or more candidate CLI measurement resources.

Correspondingly, the terminal device receives the third indication information.

S630: The network device sends fourth indication information, where the fourth indication information is used to indicate one or more CLI measurement resources from one or more activated CLI measurement resources determined in the third indication information.

Correspondingly, the terminal device receives the fourth indication information.

S640: The terminal device performs CLI measurement based on the one or more CLI measurement resources.

It can be learned that the network device may configure the one or more candidate CLI measurement resources based on the resource configuration information, then indicate the one or more activated CLI measurement resources from the one or more candidate CLI measurement resources by using the third indication information, and finally indicate the one or more CLI measurement resources from the one or more activated CLI measurement resources by using the fourth indication information, to determine the CLI measurement resource used for the CLI measurement. In this way, the terminal device may perform the CLI measurement based on the one or more CLI measurement resources to obtain a CLI measurement result.

In some possible examples, the resource configuration information includes at least one of the following: first resource identification information, time-frequency domain position information, or SRS sequence information; the first resource identification information is used to configure an ID of the one or more candidate CLI measurement resources; the time-frequency domain position information is used to configure a time-frequency domain position of the one or more candidate CLI measurement resources; and the SRS sequence information is used to configure a sequence of SRS signals carried by the one or more candidate CLI measurement resources.

In this way, the network device may implement a network configuration of the ID of the one or more candidate CLI measurement resources based on the first resource identification information, so that the terminal device may learn, based on the identifier of the CLI measurement resource, a CLI measurement resource that can be used.

The network device may implement the time-frequency domain position of the one or more candidate CLI measurement resources of the network device based on the time-frequency domain position information, so that the terminal device may learn, based on the time-frequency domain position of the CLI measurement resource, a CLI measurement resource that can be used.

The network device may indicate, by using the SRS sequence information, an SRS signal to be received and measured by the terminal device, so that the terminal device performs the CLI measurement based on the indicated SRS signal.

In some possible examples, the third indication information includes a bitmap, and each bit in the bitmap is in a one-to-one correspondence to each of the one or more candidate CLI measurement resources; and each bit in the bitmap is used to indicate an activated or deactivated state of a candidate CLI measurement resource corresponding to the bit.

In this way, the activated or deactivated state of the candidate CLI measurement resource is indicated by using the bitmap.

In some possible examples, the third indication information includes one or more pieces of identification information and each of the one or more pieces of identification information is in a one-to-one correspondence to each of the one or more candidate CLI measurement resources; and each of the one or more pieces of identification information is used to indicate an activated or deactivated state of a candidate CLI measurement resource corresponding to the identification information.

In this way, the activated or deactivated state of the candidate CLI measurement resource is indicated by using the identification information.

In some possible examples, the resource configuration information is carried by the RRC signaling, the third indication information is carried by the MAC CE, and the fourth indication information is carried by the group DCI or the UE specific DCI.

In this way, in this embodiment, the one or more candidate CLI measurement resources are first configured by the network via the RRC signaling, then the one or more activated CLI measurement resources are indicated via the MAC, and finally the one or more CLI measurement resources are indicated by using the group DCI or the UE specific DCI, to determine the CLI measurement resource used for the CLI measurement.

In some possible examples, the fourth indication information may be a resource indication field corresponding to one or more terminal devices in the group DCI. Each terminal device corresponds to one resource indication field, or a plurality of terminal devices share one resource indication field; and the one resource indication field is used to indicate one CLI measurement resource from the one or more activated CLI measurement resources, and a value of the one resource indication field corresponds to one CLI measurement resource ID.

In this way, the one CLI measurement resource used for the CLI measurement is indicated from the one or more activated CLI measurement resources by using the resource indication field in the group DCI.

In some possible examples, the fourth indication information may be a resource indication field corresponding to one or more terminal devices in the group DCI. Each terminal device corresponds to one resource indication field, or a plurality of terminal devices share one resource indication field; and the one resource indication field is used to indicate a plurality of CLI measurement resources from the one or more activated CLI measurement resources, and a value of the one resource indication field corresponds to one CLI measurement resource combination ID.

In this way, the plurality of CLI measurement resources used for the CLI measurement are indicated from the one or more activated CLI measurement resources by using the resource indication field in the group DCI.

In some possible examples, the fourth indication information may be a resource indication field corresponding to one or more terminal devices in the group DCI. Each terminal device corresponds to a plurality of resource indication fields, or a plurality of terminal devices share one resource indication field; and each resource indication field is used to indicate one CLI measurement resource from the one or more activated CLI measurement resources, and a value of each resource indication field corresponds to one CLI measurement resource ID.

In this way, one or more CLI measurement resources used for the CLI measurement are indicated from the one or more activated CLI measurement resources by using the resource indication field in the group DCI.

In some possible examples, the fourth indication information may be a dedicated field in UE specific DCI; and the dedicated field is used to indicate one or more CLI measurement resources from the one or more activated CLI measurement resources, and a value of the dedicated field corresponds to one CLI measurement resource ID or one CLI measurement resource combination ID.

In this way, the one or more CLI measurement resources are indicated from the one or more activated CLI measurement resources by using the dedicated field in the UE specific DCI.

In some possible examples, the fourth indication information may be an existing field in UE specific DCI; and the existing field is used to indicate one or more CLI measurement resources from the one or more activated CLI measurement resources, and a specific value of the existing field corresponds to one CLI measurement resource ID or one CLI measurement resource combination ID.

In this way, the one or more CLI measurement resources are indicated from the one or more activated CLI measurement resources by using the existing field in the UE specific DCI.

### [Solution 4]

After the terminal device performs CLI measurement based on a CLI measurement resource determined from the one or more candidate CLI measurement resources, the terminal device may need to send a CLI measurement report to the network device. The CLI measurement report may include a CLI measurement result, such that the CLI measurement result is reported to the network device via the CLI measurement report. In this way, the network device may perform processing such as related scheduling based on the CLI measurement result, to better suppress or resist the CLI and avoid or mitigate impact of the CLI on performance such as network stability.

In some possible examples, the CLI measurement report may include resource identification information. The resource identification information may be used to indicate a CLI measurement resource ID corresponding to the CLI measurement resource determined from the one or more candidate CLI measurement resources.

In this way, the CLI measurement resource ID corresponding to the CLI measurement resource determined by the terminal device is reported by using the resource identification information, so that the network device can learn the CLI measurement resource used for the CLI measurement.

In addition, in a case of insufficient reporting resources, for example, limited time-frequency resources and limited transmit power, the terminal device may preferentially discard a CLI measurement resource ID corresponding to a smaller CLI measured value, that is, skip reporting the CLI measurement resource ID corresponding to the smaller CLI measured value.

In some possible examples, the CLI measurement report may include CLI measurement result information. The CLI measurement result information may be used to indicate a measurement result obtained by performing the CLI measurement based on the CLI measurement resource determined from the one or more candidate CLI measurement resources.

In this way, the measurement result obtained by performing the CLI measurement based on the CLI measurement resource determined by the terminal device is reported by using the CLI measurement result information, so that the network device can learn the measurement result.

In addition, in a case of insufficient reporting resources, for example, limited time-frequency resources and limited transmit power, the terminal device may preferentially discard a smaller CLI measured value, that is, skip reporting the smaller CLI measured value.

In this embodiment, information included in the CLI measurement report is specifically described in the following manners.

### "Manner 1"

In "manner 1", the terminal device may send the CLI measurement report via a MAC CE, to report the CLI measurement result via the MAC CE.

It should be noted that, when the CLI measurement report includes the resource identification information, the resource identification information is carried by the MAC CE, so that the CLI measurement resource used for the CLI measurement is reported via the MAC CE. If the CLI measurement report includes the CLI measurement result information, the CLI measurement result information is carried by the MAC CE, so that the measurement result is reported via the MAC CE.

In some possible examples, the resource identification information includes one or more CLI measurement resource ID values, and each CLI measurement resource ID value corresponds to one CLI measurement resource ID. The CLI measurement resource ID value is in a one-to-one correspondence to the CLI measurement resource determined from the one or more candidate CLI measurement resources. That is, a quantity of CLI measurement resource ID values is the same as a quantity of CLI measurement resources determined from the one or more candidate CLI measurement resources.

In this way, the terminal device may report the one or more CLI measurement resource ID values via the MAC CE. After the network device receives the one or more CLI measurement resource ID values, the network device may obtain the CLI measurement resource used for the CLI measurement.

In some possible examples, the CLI measurement result information includes one or more CLI reported values (reported quantity value), and each CLI reported value corresponds to an interval within which one CLI measured value (measured quantity value) falls.

In this way, the terminal device may report the one or more CLI reported values via the MAC CE. After the network device receives the one or more CLI reported values, the network device may determine the CLI measured value based on a correspondence between the CLI reported value and the interval within which the CLI measured value falls, to obtain the CLI measurement result.

It should be noted that for CLI-RSSI measurement, the CLI measured value may include CLI-RSS; and for SRS-RSRP measurement, the CLI measured value may include SRS-RSRP.

In addition, the CLI reported value may be an index and may be represented by a small quantity of bits, for example, seven bits. Because the CLI measured value has a large amount of information, and the CLI reported value requires only a small amount of information, in this embodiment, the correspondence between the CLI reported value and the interval within which the CLI measured value falls may be established. In this way, the terminal device may report the CLI measured value based on the foregoing correspondence by simply reporting the CLI reported value. In addition, because the CLI reported value has less information than the CLI measured value, signaling and resource overheads required for reporting the measurement result are reduced.

The following uses the correspondence between the CLI reported value and the interval within which the CLI measured value falls as an example.

For example, as shown in Table 3, Table 3 shows a correspondence between the CLI reported value and an interval within which the SRS-RSRP falls. SRS-RSRP_0 represents an index, and SRS-RSRP<-140 represents the interval within which the SRS-RSRP falls. The rest can be understood in the same way.

**Table 3**

| CLI reported value | Interval within which the SRS-RSRP falls | Unit |
|---|---|---|
| SRS-RSRP_0 | SRS-RSRP<-140 | dBm |
| SRS-RSRP_1 | -140≤SRS-RSRP<-139 | dBm |
| SRS-RSRP_2 | -139≤SRS-RSRP<-138 | dBm |
| SRS-RSRP_3 | -138≤SRS-RSRP<-137 | dBm |
| SRS-RSRP_4 | -137≤SRS-RSRP<-136 | dBm |
| ... | ... | ... |
| SRS-RSRP_95 | -46≤SRS-RSRP<-45 | dBm |
| SRS-RSRP_96 | -45≤SRS-RSRP<-44 | dBm |
| SRS-RSRP_97 | -44≤SRS-RSRP | dBm |
| SRS-RSRP_98 | Infinity (Infinity) | dBm |
| "Infinity" represents that the terminal device cannot perform the CLI measurement due to excessively high signal strength. | | |

For another example, as shown in Table 4, Table 4 shows a correspondence between the CLI reported value and an interval within which the CLI-RSSI falls. CLI-RSSI_00 represents an index, and CLI-RSSI<-100 represents the interval within which the CLI-RSSI falls. The rest can be understood in the same way.

**Table 4**

| CLI reported value | Interval within which the CLI-RSSI falls | Unit |
|---|---|---|
| CLI-RSSI_00 | CLI-RSSI<-100 | dBm |
| CLI-RSSI_01 | -100≤CLI-RSSI<-99 | dBm |
| CLI-RSSI_02 | -99≤CLI-RSSI<-98 | dBm |
| ... | ... | ... |
| CLI-RSSI_74 | -27≤CLI-RSSI<-26 | dBm |
| CLI-RSSI_75 | -26≤CLI-RSSI<-25 | dBm |
| CLI-RSSI_76 | -25≤CLI-RSSI | dBm |

In some possible examples, the CLI measurement result information includes one or more CLI measured values. The CLI measured value is in a one-to-one correspondence to the CLI measurement resource determined from the one or more candidate CLI measurement resources. That is, a quantity of CLI measured values is the same as a quantity of CLI measurement resources determined from the one or more candidate CLI measurement resources. In this way, the terminal device may directly report the CLI measured value via the MAC CE.

In some possible examples, each CLI measurement resource ID value in the resource identification information occupies M bits of the MAC CE, and each CLI reported value in the CLI measurement result information occupies N bits of the MAC CE, where M and N are positive integers.

The following uses an example in which M is 5 and N is 9, as shown in FIG. 7. In FIG. 7, the MAC CE is identified by a MAC subheader, and a logical channel identifier (logical channel ID, LCID) of the MAC CE is a specific value. The MAC CE includes the resource identification information and the CLI measurement result information; the resource identification information includes the one or more CLI measurement resource ID values, where each CLI measurement resource ID value occupies 5 bits; and the CLI measurement result information includes the one or more CLI reported values, where each CLI reported value occupies 7 bits.

### "Manner 2"

In "manner 2", the terminal device may send the CLI measurement report by using UCI, to report the CLI measurement result by using the UCI.

It should be noted that, when the CLI measurement report includes the resource identification information, the resource identification information is carried by the UCI, so that the CLI measurement resource used for the CLI measurement is reported by using the UCI. If the CLI measurement report includes the CLI measurement result information, the CLI measurement result information is carried by the UCI, so that the measurement result is reported by using the UCI.

In some possible examples, the resource identification information includes one or more CLI measurement resource ID values, and each CLI measurement resource ID value corresponds to one CLI measurement resource ID. The CLI measurement resource ID value is in a one-to-one correspondence to the CLI measurement resource determined from the one or more candidate CLI measurement resources.

In this way, the terminal device may report the one or more CLI measurement resource ID values by using the UCI. After the network device receives the one or more CLI measurement resource ID values, the network device may obtain the CLI measurement resource used for the CLI measurement.

In some possible examples, the resource identification information occupies $\left⌈{log}_{2}\left(K\right)\right⌉$ bits of the UCI, and *K* represents a quantity of CLI measurement resources determined from the one or more candidate CLI measurement resources.

For example, if the quantity of CLI measurement resources determined from the one or more candidate CLI measurement resources is 8, three bits are required to indicate CLI measurement resource IDs corresponding to the eight CLI measurement resources. In this way, compared with using eight bits to separately indicate the CLI measurement resource IDs, using three bits may achieve a reduction of signaling and resource overheads.

In some possible examples, the CLI measurement result information includes one or more absolute CLI reported values (absolute reported quantity value) and/or one or more differential CLI reported values (differential reported quantity value), where each absolute CLI reported value corresponds to an interval within which one absolute CLI measured value (absolute measured quantity value) falls, and each differential CLI reported value corresponds to an interval within which one differential CLI measured value (differential measured quantity value) falls.

In this way, the terminal device may report the one or more absolute CLI reported values and/or the one or more differential reported values by using the UCI. After the network device receives these CLI reported values, the network device may determine the CLI measured value based on a correspondence between the CLI reported value and the interval within which the CLI measured value falls, to obtain the CLI measurement result.

It should be noted that the absolute CLI measured value is an original CLI measured value, that is, a CLI measured value reported is its own value; and the absolute CLI reported value is a CLI reported value corresponding to the absolute CLI measured value.

The differential CLI measured value is a difference between the absolute CLI measured value and a reference CLI measured value; and the differential CLI reported value is a CLI reported value corresponding to the differential CLI measured value. The reference CLI measured value may be a CLI measured value obtained by performing CLI measurement based on the reference CLI measurement resource, may be a maximum value among all CLI measured values obtained by the terminal device, or may be a specific value configured by a network, pre-configured, or specified by a protocol. For the reference CLI measurement resource, the network device configures the reference CLI measurement resource for the terminal device through signaling.

In addition, either the absolute CLI reported value or the differential CLI reported value may be an index, and may be represented by a small quantity of bits.

Because the differential CLI measured value is a difference, the differential CLI measured value has less information than the absolute CLI measured value, so that the differential CLI reported value also has less information than the absolute CLI reported value.

**Table 5**

| Field | Size (Unit: bit) |
|---|---|
| Resource identification information | $\left⌈{log}_{2}\left(K\right)\right⌉$ |
| Absolute SRS-RSRP reported value or absolute CLI-RSSI reported value | 7 |
| Differential SRS-RSRP reported value or differential CLI-RSSI reported value | 4 |

For example, a structure of the UCI is used as an example. As shown in Table 5, in Table 5, the resource identification information occupies $\left⌈{log}_{2}\left(K\right)\right⌉$ bits of the UCI, the differential CLI reported value occupies 4 bits, and the absolute CLI reported value occupies 7 bits.

In this way, compared with reporting the absolute CLI reported value, reporting the differential CLI reported value has fewer signaling and resource overheads, thereby helping reduce overheads.

The following uses a correspondence between the differential CLI reported value and the interval within which the differential CLI measured value falls as an example.

For example, as shown in Table 6, Table 6 shows a correspondence between the differential CLI reported value and an interval within which differential SRS-RSRP falls. DIFFRSRP_0 represents an index, 0≥ΔRSRP>-2 represents the interval within which the differential SRS-RSRP falls (that is, ΔRSRP). The rest can be understood in the same way.

**Table 6**

| Differential CLI reported value | Interval within which the differential SRS-RSRP falls | Unit |
|---|---|---|
| DIFFRSRP_0 | 0≥ΔRSRP>-2 | dB |
| DIFFRSRP_1 | -2≥ΔRSRP>-4 | dB |
| DIFFRSRP_2 | -4≥ΔRSRP>-6 | dB |
| DIFFRSRP_3 | -6≥ΔRSRP>-8 | dB |
| DIFFRSRP_4 | -8≥ΔRSRP>-10 | dB |
| DIFFRSRP_5 | -10≥ΔRSRP>-12 | dB |
| DIFFRSRP_6 | -12≥ΔRSRP>-14 | dB |
| DIFFRSRP_7 | -14≥ΔRSRP>-16 | dB |
| DIFFRSRP_8 | -16≥ΔRSRP>-18 | dB |
| DIFFRSRP_9 | -18≥ΔRSRP>-20 | dB |
| DIFFRSRP_10 | -20≥ΔRSRP>-22 | dB |
| DIFFRSRP_11 | -22≥ΔRSRP>-24 | dB |
| DIFFRSRP_12 | -24≥ΔRSRP>-26 | dB |
| DIFFRSRP_13 | -26≥ΔRSRP>-28 | dB |
| DIFFRSRP_14 | -28≥ΔRSRP>-30 | dB |
| DIFFRSRP_15 | -30≥ΔRSRP | dB |

In some possible examples, if *K* ≥ 2 , and *K* represents a quantity of CLI measurement resources determined from the one or more candidate CLI measurement resources, the CLI measurement result information includes one absolute CLI reported value and one or more relative CLI reported values. The one absolute CLI reported value corresponds to an interval within which one reference CLI measured value falls; and each differential CLI reported value corresponds to an interval within which another CLI measured value other than the one reference CLI measured value falls.

It may be understood that, if *K* ≥ 2 , the terminal device may report the interval within which the reference CLI measured value falls by using the absolute CLI reported value, and the another CLI measured value other than the one reference CLI measured value is reported by using the differential CLI reported value.

For example, if *K* ≥ 2 , when the reference CLI measured value is a maximum CLI measured value, the interval within which the reference CLI measured value falls is reported by using the absolute CLI reported value of 7 bits, and the interval within which the another CLI measured value falls is reported by using the differential CLI reported value of 4 bits.

In this way, the terminal device may report the one or more absolute CLI reported values and/or the one or more differential reported values via the MAC CE. After the network device receives these CLI reported values, the network device may determine the CLI measured value based on a correspondence between the CLI reported value and the interval within which the CLI measured value falls, to obtain the CLI measurement result.

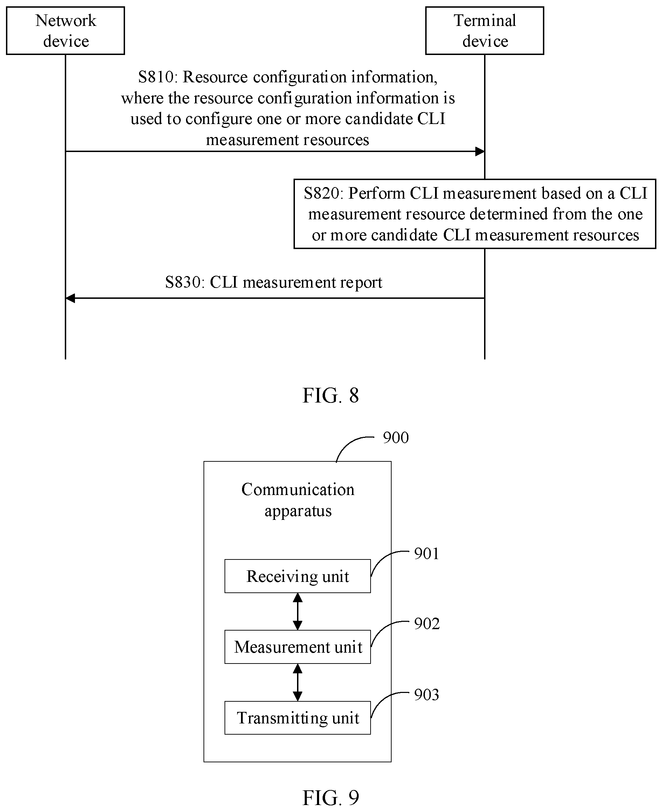

The following describes "solution 4" by way of example with interaction between the network device and the terminal device as an example, as shown in FIG. 8. FIG. 8 is a schematic flowchart of a CLI measurement reporting method according to an embodiment of this application. In FIG. 8, the method includes the following steps:
S810: The network device sends resource configuration information, where the resource configuration information is used to configure one or more candidate CLI measurement resources.

Correspondingly, the terminal device receives the resource configuration information.

S820: The terminal device performs CLI measurement based on the CLI measurement resource determined from the one or more candidate CLI measurement resources.

S830: The terminal device sends the CLI measurement report.

It can be seen that, to cope with CLI in a full-duplex mode, the network device may configure the one or more candidate CLI measurement resources based on the resource configuration information. After the terminal device performs the CLI measurement based on the CLI measurement resource determined from the one or more candidate CLI measurement resources, the terminal device sends the CLI measurement report to the network device. The CLI measurement report may include the CLI measurement result, such that the CLI measurement result is reported to the network device via the CLI measurement report. In this way, the network device may perform processing such as related scheduling based on the CLI measurement result, to better suppress or resist the CLI and avoid or mitigate impact of the CLI on performance such as network stability.

In some possible examples, the CLI measurement report includes second resource identification information; and the second resource identification information is used to indicate a CLI measurement resource ID corresponding to the CLI measurement resource determined from the one or more candidate CLI measurement resources.

In this way, the CLI measurement resource ID corresponding to the CLI measurement resource determined by the terminal device is reported by using the second resource identification information, so that the network device can learn the CLI measurement resource used for the CLI measurement.

In some possible examples, the second resource identification information is carried by a MAC CE; and the second resource identification information includes one or more CLI measurement resource ID values, and each CLI measurement resource ID value occupies M bits of the MAC CE, where M is a positive integer.

In this way, the terminal device may report the one or more CLI measurement resource ID values via the MAC CE. After the network device receives the one or more CLI measurement resource ID values, the network device may obtain the CLI measurement resource used for the CLI measurement.

In some possible examples, the second resource identification information is carried by UCI; and the second resource identification information occupies $\left⌈{log}_{2}\left(K\right)\right⌉$ bits of the UCI, and *K* represents a quantity of CLI measurement resources determined from the one or more candidate CLI measurement resources.

In this way, the terminal device may report, by using the UCI, the CLI measurement resource ID corresponding to the CLI measurement resource determined by the terminal device, so that the network device can learn the CLI measurement resource used for the CLI measurement.

In some possible examples, the CLI measurement report includes CLI measurement result information; and the CLI measurement result information is used to indicate a measurement result obtained by performing the CLI measurement based on the CLI measurement resource determined from the one or more candidate CLI measurement resources.

In this way, the measurement result obtained by performing the CLI measurement based on the CLI measurement resource determined by the terminal device is reported by using the CLI measurement result information, so that the network device can learn the measurement result.

In some possible examples, the CLI measurement result information is carried by the MAC CE; the CLI measurement result information includes one or more CLI reported values, and each CLI reported value corresponds to an interval within which one CLI measured value falls; or the CLI measurement result information includes one or more CLI measured values.

In this way, the terminal device may report the one or more CLI reported values via the MAC CE. After the network device receives the one or more CLI reported values, the network device may determine the CLI measured value based on a correspondence between the CLI reported value and the interval within which the CLI measured value falls, to obtain the CLI measurement result.

In some possible examples, the CLI measurement result information is carried by the UCI; the CLI measurement result information includes one or more absolute CLI reported values, and each absolute CLI reported value corresponds to an interval within which one absolute CLI measured value falls; and/or the CLI measurement result information includes one or more differential CLI reported values, and each differential CLI reported value corresponds to an interval within which one differential CLI measured value falls.

In this way, the terminal device may report the one or more absolute CLI reported values and/or the one or more differential reported values by using the UCI. After the network device receives these CLI reported values, the network device may determine the CLI measured value based on a correspondence between the CLI reported value and the interval within which the CLI measured value falls, to obtain the CLI measurement result.

In some possible examples, the CLI measurement result information is carried by the UCI; if *K* ≥ 2 , and *K* represents a quantity of CLI measurement resources determined from the one or more candidate CLI measurement resources, the CLI measurement result information includes one absolute CLI reported value and one or more differential CLI reported values; the one absolute CLI reported value corresponds to an interval within which one reference CLI measured value falls; and each differential CLI reported value corresponds to an interval within which another CLI measured value other than the one reference CLI measured value falls.

In this way, if *K* ≥ 2 , the terminal device may report the interval within which the reference CLI measured value falls by using the absolute CLI reported value, and the another CLI measured value other than the one reference CLI measured value is reported by using the differential CLI reported value.

The solutions in embodiments of this application are mainly described above from a perspective of a method side. The following describes a functional unit of a communication apparatus in this embodiment by way of example. It may be understood that, to implement the foregoing functions, a terminal device includes a corresponding hardware structure and/or software module for executing the functions. A person skilled in the art should be easily aware that in this embodiment, units and algorithm steps in the examples described with reference to embodiments disclosed in this specification can be implemented by hardware or a combination of hardware and computer software. Whether a function is executed by hardware or hardware driven by computer software depends on particular applications and design constraints of the technical solutions. A person skilled in the art may use different methods to implement the described functions for each specific application, but it should not be considered that the implementation goes beyond the scope of this embodiment.

In embodiments of this application, functional units of the terminal device may be divided based on the foregoing method examples. For example, each functional unit may be obtained through division for a corresponding function, or two or more functions may be integrated into one processing unit. The foregoing integrated unit may be implemented in a form of hardware, or may be implemented in a form of a software program module. It should be noted that, unit division in embodiments of this application is merely an example, and is merely logical function division. There may be another division manner in actual implementation.

When the integrated unit is used, FIG. 9 is a block diagram of composition of a functional unit of a communication apparatus according to an embodiment of this application. The communication apparatus 900 includes a receiving unit 901, a measurement unit 902, and a transmitting unit 903.

Optionally, the receiving unit 901 may be a module unit configured to perform receiving processing on a signal, information, and the like. This is not specifically limited.

Optionally, the measurement unit 902 may be a module unit configured to perform CLI measurement. This is not specifically limited.

Optionally, the transmitting unit 903 may be a module unit configured to perform transmitting processing on a signal, information, and the like. This is not specifically limited.

Optionally, the communication apparatus 900 may further include a storage unit configured to store computer program code or instructions executed by the communication apparatus 900. The storage unit may be a memory.

Optionally, the communication apparatus 900 may be a chip or a chip module.

Optionally, the receiving unit 901 and the transmitting unit 903 may be integrated into a same unit, or may be integrated into different units.

For example, the receiving unit 901 and the transmitting unit 903 may be integrated into a communication unit. The communication unit may be a communication interface, a transceiver, a transceiver circuit, or the like.

Optionally, the measurement unit 902 may be integrated into a processing unit.

It should be noted that the processing unit may be a processor or a controller, for example, a baseband processor, a baseband chip, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit may implement or execute various logical blocks, modules, and circuits for example described with reference to the content disclosed in this embodiment. The processing unit may alternatively be a combination that implements a computing function, for example, a combination of one or more microprocessors or a combination of a DSP and a microprocessor.

Optionally, the communication apparatus 900 is configured to perform any step or the like performed by the terminal device/chip/chip module in the foregoing method embodiment.

In specific implementation, the receiving unit 901, the measurement unit 902, and the transmitting unit 903 are configured to perform any step in the foregoing method embodiment, and when actions such as transmitting are performed, another unit may be optionally invoked to complete a corresponding operation. Details are described below.

The receiving unit 901 is configured to receive resource configuration information, where the resource configuration information is used to configure one or more candidate CLI measurement resources;
the measurement unit 902 is configured to perform CLI measurement based on a CLI measurement resource determined from the one or more candidate CLI measurement resources; and
the transmitting unit 903 is configured to send a CLI measurement report.

It can be seen that, to cope with CLI in a full-duplex mode, the one or more candidate CLI measurement resources are configured based on the resource configuration information. After the CLI measurement is performed based on the CLI measurement resource determined from the one or more candidate CLI measurement resources, a CLI measurement result is reported to a network device via the CLI measurement report, so that the network device may perform processing such as related scheduling based on the CLI measurement result, to better suppress or resist the CLI and avoid or mitigate impact of the CLI on performance such as network stability.

It should be noted that, for specific implementation of the operations in the embodiment shown in FIG. 9, refer to the description in the foregoing method embodiment, and details are not described herein again.

The solutions in embodiments of this application are mainly described above from a perspective of a method side. The following describes a functional unit of another communication apparatus in this embodiment by way of example. It may be understood that, to implement the foregoing functions, a network device includes a corresponding hardware structure and/or software module for executing the functions. A person skilled in the art should be easily aware that in this embodiment, units and algorithm steps in the examples described with reference to embodiments disclosed in this specification can be implemented by hardware or a combination of hardware and computer software. Whether a function is executed by hardware or hardware driven by computer software depends on particular applications and design constraints of the technical solutions. A person skilled in the art may use different methods to implement the described functions for each specific application, but it should not be considered that the implementation goes beyond the scope of this embodiment.

In embodiments of this application, functional units of the network device may be divided based on the foregoing method examples. For example, each functional unit may be obtained through division for a corresponding function, or two or more functions may be integrated into one processing unit. The foregoing integrated unit may be implemented in a form of hardware, or may be implemented in a form of a software program module. It should be noted that, unit division in embodiments of this application is merely an example, and is merely logical function division. There may be another division manner in actual implementation.

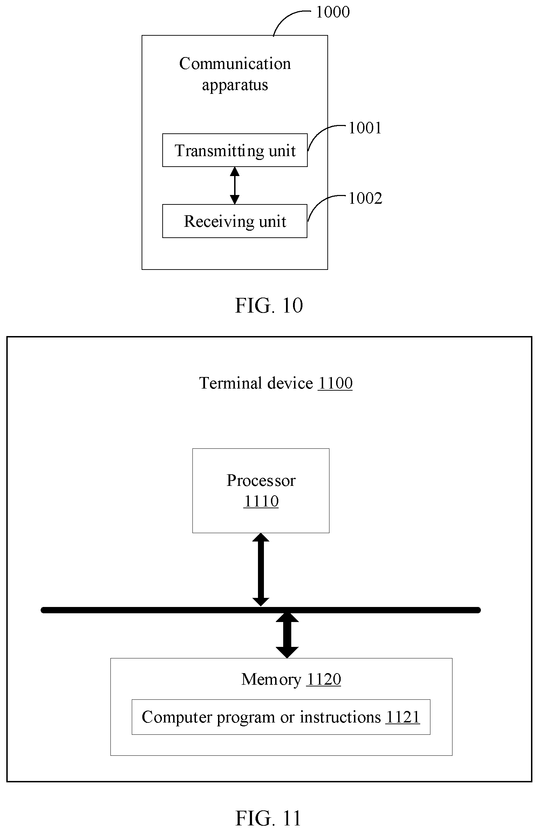

When the integrated unit is used, FIG. 10 is a block diagram of composition of a functional unit of another communication apparatus according to an embodiment of this application. A communication apparatus 1000 includes a transmitting unit 1001 and a receiving unit 1002.

Optionally, the transmitting unit 1001 may be a module unit configured to perform transmitting processing on a signal, information, and the like. This is not specifically limited.

Optionally, the receiving unit 1002 may be a module unit configured to perform receiving processing on a signal, information, and the like. This is not specifically limited.

Optionally, the communication apparatus 1000 may further include a storage unit configured to store computer program code or instructions executed by the communication apparatus 1000. The storage unit may be a memory.

Optionally, the communication apparatus 1000 may be a chip or a chip module.

Optionally, the transmitting unit 1001 and the receiving unit 1002 may be integrated into a communication unit. The communication unit may be a communication interface, a transceiver, a transceiver circuit, or the like.

Optionally, the communication apparatus 1000 may further include a processing unit.

It should be noted that the processing unit may be a processor or a controller, for example, a baseband processor, a baseband chip, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit may implement or execute various logical blocks, modules, and circuits for example described with reference to the content disclosed in this embodiment. The processing unit may alternatively be a combination that implements a computing function, for example, a combination of one or more microprocessors or a combination of a DSP and a microprocessor.

Optionally, the communication apparatus 1000 is configured to perform any step or the like performed by the chip/chip module/network device in the foregoing method embodiment.

In specific implementation, the transmitting unit 1001 and the receiving unit 1002 are configured to perform any step in the foregoing method embodiment, and when actions such as transmitting are performed, another unit may be optionally invoked to complete a corresponding operation. Details are described below.

The transmitting unit 1001 is configured to send resource configuration information, where the resource configuration information is used to configure one or more candidate CLI measurement resources, and the one or more candidate CLI measurement resources are used to perform CLI measurement.

The receiving unit 1002 is configured to receive a CLI measurement report.

It can be seen that, to cope with CLI in a full-duplex mode, the one or more candidate CLI measurement resources are configured based on the resource configuration information. After the CLI measurement is performed based on the CLI measurement resource determined from the one or more candidate CLI measurement resources, a CLI measurement result is reported to a network device via the CLI measurement report, so that the network device may perform processing such as related scheduling based on the CLI measurement result, to better suppress or resist the CLI and avoid or mitigate impact of the CLI on performance such as network stability.

It should be noted that, for specific implementation of the operations in the embodiment shown in FIG. 10, refer to the description in the foregoing method embodiment, and details are not described herein again.

The following describes a structure of a terminal device in this embodiment by way of example.

Refer to FIG. 11. FIG. 11 is a diagram of a structure of a terminal device according to an embodiment of this application. The terminal device 1100 may include a processor 1110, a memory 1120, and a communication bus configured to connect the processor 1110 and the memory 1120.

Optionally, the memory 1120 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM), and the memory 1120 is configured to store program code executed by and data transmitted by the terminal device 1100.

Optionally, the terminal device 1100 further includes a communication interface configured to receive and transmit data.

Optionally, the terminal device 1100 may be the foregoing first terminal device.

Optionally, the processor 1110 may be one or more CPUs. When the processor 1110 is one CPU, the CPU may be a single-core CPU, or may be a multi-core CPU.

Optionally, the processor 1110 may be a baseband chip, a chip, a CPU, a general-purpose processor, a DSP, an ASIC, an FPGA, or another programmable logic device, a transistor logic device, a hardware component, or any combination thereof.

In specific implementation, the processor 1110 in the terminal device 1100 is configured to execute a computer program or instructions 1121 stored in the memory 1120, to perform the following operations:
receiving resource configuration information, where the resource configuration information is used to configure one or more candidate CLI measurement resources;
performing CLI measurement based on a CLI measurement resource determined from the one or more candidate CLI measurement resources; and
sending a CLI measurement report.

It can be seen that, to cope with CLI in a full-duplex mode, the one or more candidate CLI measurement resources are configured based on the resource configuration information. After the CLI measurement is performed based on the CLI measurement resource determined from the one or more candidate CLI measurement resources, a CLI measurement result is reported to a network device via the CLI measurement report, so that the network device may perform processing such as related scheduling based on the CLI measurement result, to better suppress or resist the CLI and avoid or mitigate impact of the CLI on performance such as network stability.

It should be noted that corresponding descriptions in the foregoing method embodiment may be used for specific implementation of the operations. The terminal device 1100 may be configured to perform the foregoing method embodiment in this embodiment, and details are not described herein again.

The following describes a structure of a network device in this embodiment by way of example.

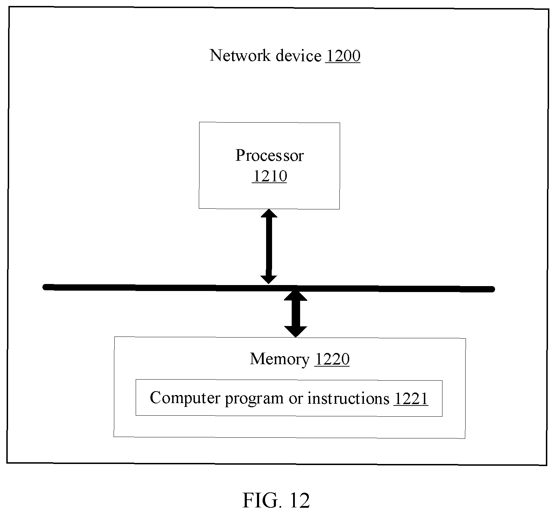

Refer to FIG. 12. FIG. 12 is a diagram of a structure of a network device according to an embodiment of this application. The network device 1200 includes a processor 1210, a memory 1220, and a communication bus configured to connect the processor 1210 and the memory 1220.

Optionally, the memory 1220 includes but is not limited to a RAM, a ROM, an EPROM, or a CD-ROM, and the memory 1220 is configured to store related instructions and data.

Optionally, the network device 1200 further includes a communication interface configured to receive and transmit data.

Optionally, the processor 1210 may be one or more CPUs. When the processor 1210 is one CPU, the CPU may be a single-core CPU, or may be a multi-core CPU.

Optionally, the processor 1210 may be a baseband chip, a chip, a CPU, a general-purpose processor, a DSP, an ASIC, an FPGA, or another programmable logic device, a transistor logic device, a hardware component, or any combination thereof.

Optionally, the processor 1210 in the network device 1200 is configured to execute a computer program or instructions 1221 stored in the memory 1220, to perform the following operations:
sending resource configuration information, where the resource configuration information is used to configure one or more candidate CLI measurement resources, and the one or more candidate CLI measurement resources are used to perform CLI measurement; and
receiving a CLI measurement report.

It can be seen that, to cope with CLI in a full-duplex mode, the one or more candidate CLI measurement resources are configured based on the resource configuration information. After the CLI measurement is performed based on the CLI measurement resource determined from the one or more candidate CLI measurement resources, a CLI measurement result is reported to a network device via the CLI measurement report, so that the network device may perform processing such as related scheduling based on the CLI measurement result, to better suppress or resist the CLI and avoid or mitigate impact of the CLI on performance such as network stability.

It should be noted that corresponding descriptions in the foregoing method embodiment may be used for specific implementation of the operations. The network device 1200 may be configured to perform the foregoing method embodiment in this embodiment, and details are not described herein again.

The following describes other related content of this embodiment by way of example.

Optionally, the foregoing method embodiment may be applied to a terminal device or in a terminal device. That is, an execution body of the foregoing method embodiment may be a terminal device, or may be a chip, a chip module, a module or the like. This is not specifically limited.

Optionally, the foregoing method embodiment may be applied to a network device or in a network device. That is, an execution body of the foregoing method embodiment may be a network device, or may be a chip, a chip module, a module, or the like. This is not specifically limited.

An embodiment of this application further provides a chip, including a processor, a memory, and a computer program or instructions stored in the memory, where the processor executes the computer program or instructions to implement the steps described in the foregoing method embodiment.

An embodiment of this application further provides a chip module, including a transceiver component and a chip, where the chip includes a processor, a memory, and a computer program or instructions stored in the memory, and the processor executes the computer program or instructions to implement the steps described in the foregoing method embodiment.

An embodiment of this application further provides a computer-readable storage medium with a computer program or an instructions stored thereon. The computer program or instructions, when executed, cause the steps described in the foregoing method embodiment to be implemented.

An embodiment of this application further provides a computer program product, including a computer program or instructions that, when executed, cause the steps described in the foregoing method embodiment to be implemented.

An embodiment of this application further provides a communication system, including the foregoing terminal device and the foregoing network device.

It should be noted that, for brief description, the foregoing embodiments are described as a series of action combinations. A person skilled in the art should know that this application is not limited by the described action sequence, because some steps in embodiments of this application may be performed in another sequence or simultaneously. In addition, a person skilled in the art should also know that all embodiments described in the specification are preferred embodiments, and the involved actions, steps, modules or units are not necessarily mandatory to embodiments of this application.

In the foregoing embodiments of this application, the descriptions of the embodiments have different focuses, and for a part that is not described in detail in an embodiment, reference may be made to the relevant description of other embodiments.

Steps of methods or algorithms described in embodiments of this application may be implemented by hardware, or may be implemented by a processor by executing software instructions. The software instructions may include a corresponding software module, and the software module may be stored in a RAM, a flash memory, a ROM, an EPROM, an electrically erasable programmable read-only memory (electrically EPROM, EEPROM), a register, a hard disk, a removable hard disk, a compact disc read-only memory (CD-ROM), or a storage medium in any other forms well-known in the art. An example storage medium is coupled to a processor, to enable the processor to read information from and write information to the storage medium. Certainly, the storage medium may also be an integral part of the processor. The processor and the storage medium may be located in an ASIC. In addition, the ASIC may be located in a terminal device or a management device. Certainly, the processor and the storage medium may alternatively exist in a terminal device or a management device as discrete components.

A person skilled in the art should be aware that in the foregoing one or more examples, some or all of the functions described in embodiments of this application may be implemented by software, hardware, firmware, or any combination thereof. When the software is used for implementation, some or all of the embodiments may be implemented in a form of a computer program product. The computer program product includes one or more computer instructions. When the computer program instructions are loaded and executed on a computer, some or all of the procedures or functions in embodiments of this application are generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) mode. The computer-readable storage medium may be any available medium accessible by a computer, or a data storage device, for example, a server or a data center, integrating one or more available media. The available medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

The modules/units included in the apparatuses and products described in the foregoing embodiments may be software modules/units, or may be hardware modules/units, or may partly be software modules/units and partly be hardware modules/units. For example, the modules/units included in the apparatuses and products that are used in or integrated into a chip may all be implemented by hardware such as a circuit, or at least some of the modules/units may be implemented by a software program, where the software program runs on a processor integrated in the chip, and the remaining (if any) modules/units may be implemented by hardware such as a circuit; the modules/units included in the apparatuses and products that are used in or integrated into a chip module may all be implemented by hardware such as a circuit, and different modules/units may be located in a same component (for example, a chip or a circuit module) or in different components of the chip module, or at least some of the modules/units may be implemented by a software program, where the software program runs on a processor integrated in the chip module, and the remaining (if any) modules/units may be implemented by hardware such as a circuit; and the modules/units included in the apparatuses and products that are used in or integrated into a terminal device may all be implemented by hardware such as a circuit, and different modules/units may be located in a same component (for example, a chip or a circuit module) or in different components of the terminal device, or at least some of the modules/units may be implemented by a software program, where the software program runs on a processor integrated in the terminal device, and the remaining (if any) modules/units may be implemented by hardware such as a circuit.

The objectives, technical solutions, and beneficial effects of embodiments of this application are further described in detail in the foregoing specific implementations. It should be understood that the foregoing descriptions are merely specific implementations of embodiments of this application, but are not intended to limit the protection scope of embodiments of this application. Any modification, equivalent replacement, improvement, or the like made based on the technical solutions of embodiments of this application shall fall within the protection scope of embodiments of this application.

## Claims

1. A communication method, comprising:
receiving resource configuration information, wherein the resource configuration information is used to configure one or more candidate CLI measurement resources;
performing CLI measurement based on a CLI measurement resource determined from the one or more candidate CLI measurement resources; and
sending a CLI measurement report.

2. The method according to claim 1, wherein the resource configuration information comprises at least one of the following: first resource identification information, time-frequency domain position information, or sounding reference signal SRS signal sequence information;
the first resource identification information is used to configure a CLI measurement resource identifier ID corresponding to the one or more candidate CLI measurement resources;
the time-frequency domain position information is used to configure a time-frequency domain position of the one or more candidate CLI measurement resources; and
the SRS signal sequence information is used to configure a sequence of SRS signals carried by the one or more candidate CLI measurement resources.

3. The method according to claim 1, wherein performing the CLI measurement based on the CLI measurement resource determined from the one or more candidate CLI measurement resources comprises:
receiving first indication information, wherein the first indication information is used to indicate an activated or deactivated state of the one or more candidate CLI measurement resources; and
performing the CLI measurement based on one or more activated CLI measurement resources determined in the first indication information.

4. The method according to claim 3, wherein the first indication information comprises a bitmap, and each bit in the bitmap is in a one-to-one correspondence to each of the one or more candidate CLI measurement resources; and
each bit in the bitmap is used to indicate an activated or deactivated state of a candidate CLI measurement resource corresponding to the bit.

5. The method according to claim 3, wherein the first indication information comprises one or more pieces of identification information, and each of the one or more pieces of identification information is in a one-to-one correspondence to each of the one or more candidate CLI measurement resources; and
each of the one or more pieces of identification information is used to indicate an activated or deactivated state of a candidate CLI measurement resource corresponding to the identification information.

6. The method according to any one of claims 3 to 5, wherein the resource configuration information is carried by radio resource control RRC signaling, and the first indication information is carried by a media access control control element MAC CE.

7. The method according to claim 1, wherein performing the CLI measurement based on the CLI measurement resource determined from the one or more candidate CLI measurement resources comprises:
receiving second indication information, wherein the second indication information is used to indicate one or more CLI measurement resources from the one or more candidate CLI measurement resources; and
performing the CLI measurement based on the one or more CLI measurement resources.

8. The method according to claim 7, wherein the resource configuration information is carried by RRC signaling, and the second indication information is carried by group downlink control information group DCI or terminal device-specific DCI; or
the resource configuration information is carried by a MAC CE, and the second indication information is carried by group DCI or terminal device-specific DCI.

9. The method according to claim 8, wherein the second indication information is a resource indication field corresponding to one or more terminal devices in the group DCI;
each terminal device corresponds to one resource indication field, or a plurality of terminal devices share one resource indication field;
the one resource indication field is used to indicate one CLI measurement resource from the one or more candidate CLI measurement resources, and a value of the one resource indication field corresponds to one CLI measurement resource ID; or
the one resource indication field is used to indicate a plurality of CLI measurement resources from the one or more candidate CLI measurement resources, and a value of the one resource indication field corresponds to one CLI measurement resource combination ID.

10. The method according to claim 8, wherein the second indication information is a resource indication field corresponding to one or more terminal devices in the group DCI;
each terminal device corresponds to a plurality of resource indication fields, or a plurality of terminal devices share one resource indication field; and
each resource indication field is used to indicate one CLI measurement resource from the one or more candidate CLI measurement resources, and a value of each resource indication field corresponds to one CLI measurement resource ID.

11. The method according to claim 8, wherein the second indication information is a dedicated field or an existing field in the terminal device-specific DCI;
the dedicated field is used to indicate one or more CLI measurement resources from the one or more candidate CLI measurement resources, and a value of the dedicated field corresponds to one CLI measurement resource ID or one CLI measurement resource combination ID; or
the existing field is used to indicate one or more CLI measurement resources from the one or more candidate CLI measurement resources, and a specific value of the existing field corresponds to one CLI measurement resource ID or one CLI measurement resource combination ID.

12. The method according to claim 1, wherein performing the CLI measurement based on the CLI measurement resource determined from the one or more candidate CLI measurement resources comprises:
receiving third indication information, wherein the third indication information is used to indicate an activated or deactivated state of the one or more candidate CLI measurement resources;
receiving fourth indication information, wherein the fourth indication information is used to indicate one or more CLI measurement resources from one or more activated CLI measurement resources determined in the third indication information; and
performing the CLI measurement based on the one or more CLI measurement resources.

13. The method according to claim 12, wherein the third indication information comprises a bitmap, and each bit in the bitmap is in a one-to-one correspondence to each of the one or more candidate CLI measurement resources; and
each bit in the bitmap is used to indicate an activated or deactivated state of a candidate CLI measurement resource corresponding to the bit.

14. The method according to claim 12, wherein the third indication information comprises one or more pieces of identification information, and each of the one or more pieces of identification information is in a one-to-one correspondence to each of the one or more candidate CLI measurement resources; and
each of the one or more pieces of identification information is used to indicate an activated or deactivated state of a candidate CLI measurement resource corresponding to the identification information.

15. The method according to any one of claims 12 to 14, wherein the resource configuration information is carried by RRC signaling, the third indication information is carried by a MAC CE, and the fourth indication information is carried by group DCI or terminal device-specific DCI.

16. The method according to claim 15, wherein the fourth indication information is a resource indication field corresponding to one or more terminal devices in the group DCI;
each terminal device corresponds to one resource indication field, or a plurality of terminal devices share one resource indication field;
the one resource indication field is used to indicate one CLI measurement resource from the one or more activated CLI measurement resources determined in the third indication information, and a value of the one resource indication field corresponds to one CLI measurement resource ID; or
the one resource indication field is used to indicate a plurality of CLI measurement resources from the one or more activated CLI measurement resources determined in the third indication information, and a value of the one resource indication field corresponds to one CLI measurement resource combination ID.

17. The method according to claim 15, wherein the fourth indication information is a resource indication field corresponding to one or more terminal devices in the group DCI;
each terminal device corresponds to a plurality of resource indication fields, or a plurality of terminal devices share one resource indication field; and
each resource indication field is used to indicate one CLI measurement resource from the one or more activated CLI measurement resources determined in the third indication information, and a value of each resource indication field corresponds to one CLI measurement resource ID.

18. The method according to claim 15, wherein the fourth indication information is a dedicated field or an existing field in the terminal device-specific DCI;
the dedicated field is used to indicate one or more CLI measurement resources from the one or more activated CLI measurement resources determined in the third indication information, and a value of the dedicated field corresponds to one CLI measurement resource ID or one CLI measurement resource combination ID; or
the existing field is used to indicate one or more CLI measurement resources from the one or more activated CLI measurement resources determined in the third indication information, and a specific value of the existing field corresponds to one CLI measurement resource ID or one CLI measurement resource combination ID.

19. The method according to claim 1, wherein the CLI measurement report comprises second resource identification information; and
the second resource identification information is used to indicate a CLI measurement resource ID corresponding to the CLI measurement resource determined from the one or more candidate CLI measurement resources.

20. The method according to claim 19, wherein the second resource identification information is carried by a MAC CE; and
the second resource identification information comprises one or more CLI measurement resource ID values, and each CLI measurement resource ID value occupies M bits of the MAC CE, wherein M is a positive integer.

21. The method according to claim 19, wherein the second resource identification information is carried by uplink control information UCI; and
the second resource identification information occupies $\left⌈{log}_{2}\left(K\right)\right⌉$ bits of the UCI, and *K* represents a quantity of CLI measurement resources determined from the one or more candidate CLI measurement resources.

22. The method according to claim 1, 20, or 21, wherein the CLI measurement report comprises CLI measurement result information; and
the CLI measurement result information is used to indicate a measurement result obtained by performing the CLI measurement based on the CLI measurement resource determined from the one or more candidate CLI measurement resources.

23. The method according to claim 22, wherein the CLI measurement result information is carried by the MAC CE;
the CLI measurement result information comprises one or more CLI reported values, and each CLI reported value corresponds to an interval within which one CLI measured value falls; or
the CLI measurement result information comprises one or more CLI measured values.

24. The method according to claim 22, wherein the CLI measurement result information is carried by the UCI;
the CLI measurement result information comprises one or more absolute CLI reported values, and each absolute CLI reported value corresponds to an interval within which one absolute CLI measured value falls; and/or
the CLI measurement result information comprises one or more differential CLI reported values, and each differential CLI reported value corresponds to an interval within which one differential CLI measured value falls.

25. The method according to claim 22, wherein the CLI measurement result information is carried by the UCI;
if *K* ≥ 2 , and *K* represents the quantity of CLI measurement resources determined from the one or more candidate CLI measurement resources, the CLI measurement result information comprises one absolute CLI reported value and one or more differential CLI reported values;
the one absolute CLI reported value corresponds to an interval within which one reference CLI measured value falls; and
each differential CLI reported value corresponds to an interval within which another CLI measured value other than the one reference CLI measured value falls.

26. A communication method, comprising:
sending resource configuration information, wherein the resource configuration information is used to configure one or more candidate CLI measurement resources, and the one or more candidate CLI measurement resources are used to perform CLI measurement; and
receiving a CLI measurement report.

27. The method according to claim 26, wherein the resource configuration information comprises at least one of the following: first resource identification information, time-frequency domain position information, or sounding reference signal SRS signal sequence information;
the first resource identification information is used to configure a CLI measurement resource identifier ID corresponding to the one or more candidate CLI measurement resources;
the time-frequency domain position information is used to configure a time-frequency domain position of the one or more candidate CLI measurement resources; and
the SRS signal sequence information is used to configure a sequence of SRS signals carried by the one or more candidate CLI measurement resources.

28. The method according to claim 26, wherein after the sending configuration information, the method further comprises:
sending first indication information, wherein the first indication information is used to indicate an activated or deactivated state of the one or more candidate CLI measurement resources.

29. The method according to claim 28, wherein the first indication information comprises a bitmap, and each bit in the bitmap is in a one-to-one correspondence to each of the one or more candidate CLI measurement resources; and each bit in the bitmap is used to indicate an activated or deactivated state of a candidate CLI measurement resource corresponding to the bit; or
the first indication information comprises one or more pieces of identification information and each of the one or more pieces of identification information is in a one-to-one correspondence to each of the one or more candidate CLI measurement resources; and each of the one or more pieces of identification information is used to indicate an activated or deactivated state of a candidate CLI measurement resource corresponding to the identification information.

30. The method according to claim 28 or 29, wherein the resource configuration information is carried by radio resource control RRC signaling, and the first indication information is carried by a media access control control element MAC CE.

31. The method according to claim 26, wherein after the sending configuration information, the method further comprises:
sending second indication information, wherein the second indication information is used to indicate one or more CLI measurement resources from the one or more candidate CLI measurement resources.

32. The method according to claim 31, wherein the resource configuration information is carried by RRC signaling, and the second indication information is carried by group DCI or terminal device-specific DCI; or
the resource configuration information is carried by a MAC CE, and the second indication information is carried by group DCI or terminal device-specific DCI.

33. The method according to claim 32, wherein the second indication information is a resource indication field corresponding to one or more terminal devices in the group DCI;
each terminal device corresponds to one resource indication field, or a plurality of terminal devices share one resource indication field;
the one resource indication field is used to indicate one CLI measurement resource from the one or more candidate CLI measurement resources, and a value of the one resource indication field corresponds to one CLI measurement resource ID; or
the one resource indication field is used to indicate a plurality of CLI measurement resources from the one or more candidate CLI measurement resources, and a value of the one resource indication field corresponds to one CLI measurement resource combination ID.

34. The method according to claim 32, wherein the second indication information is a resource indication field corresponding to one or more terminal devices in the group DCI;
each terminal device corresponds to a plurality of resource indication fields, or a plurality of terminal devices share one resource indication field; and
each resource indication field is used to indicate one CLI measurement resource from the one or more candidate CLI measurement resources, and a value of each resource indication field corresponds to one CLI measurement resource ID.

35. The method according to claim 32, wherein the second indication information is a dedicated field or an existing field in the terminal device-specific DCI;
the dedicated field is used to indicate one or more CLI measurement resources from the one or more candidate CLI measurement resources, and a value of the dedicated field corresponds to one CLI measurement resource ID or one CLI measurement resource combination ID; or
the existing field is used to indicate one or more CLI measurement resources from the one or more candidate CLI measurement resources, and a specific value of the existing field corresponds to one CLI measurement resource ID or one CLI measurement resource combination ID.

36. The method according to claim 26, wherein after the sending configuration information, the method further comprises:
sending third indication information, wherein the third indication information is used to indicate an activated or deactivated state of the one or more candidate CLI measurement resources; and
sending fourth indication information, wherein the fourth indication information is used to indicate one or more CLI measurement resources from one or more activated CLI measurement resources determined in the third indication information.

37. The method according to claim 36, wherein the third indication information comprises a bitmap, and each bit in the bitmap is in a one-to-one correspondence to each of the one or more candidate CLI measurement resources; and each bit in the bitmap is used to indicate an activated or deactivated state of a candidate CLI measurement resource corresponding to the bit; or
the third indication information comprises one or more pieces of identification information and each of the one or more pieces of identification information is in a one-to-one correspondence to each of the one or more candidate CLI measurement resources; and each of the one or more pieces of identification information is used to indicate an activated or deactivated state of a candidate CLI measurement resource corresponding to the identification information.

38. The method according to claim 36 or 37, wherein the resource configuration information is carried by RRC signaling, the third indication information is carried by a MAC CE, and the fourth indication information is carried by group DCI or terminal device-specific DCI.

39. The method according to claim 38, wherein the fourth indication information is a resource indication field corresponding to one or more terminal devices in the group DCI;
each terminal device corresponds to one resource indication field, or a plurality of terminal devices share one resource indication field;
the one resource indication field is used to indicate one CLI measurement resource from the one or more activated CLI measurement resources determined in the third indication information, and a value of the one resource indication field corresponds to one CLI measurement resource ID; or
the one resource indication field is used to indicate a plurality of CLI measurement resources from the one or more activated CLI measurement resources determined in the third indication information, and a value of the one resource indication field corresponds to one CLI measurement resource combination ID.

40. The method according to claim 38, wherein the fourth indication information is a resource indication field corresponding to one or more terminal devices in the group DCI;
each terminal device corresponds to a plurality of resource indication fields, or a plurality of terminal devices share one resource indication field; and
each resource indication field is used to indicate one CLI measurement resource from the one or more activated CLI measurement resources determined in the third indication information, and a value of each resource indication field corresponds to one CLI measurement resource ID.

41. The method according to claim 38, wherein the fourth indication information is a dedicated field or an existing field in the terminal device-specific DCI;
the dedicated field is used to indicate one or more CLI measurement resources from the one or more activated CLI measurement resources determined in the third indication information, and a value of the dedicated field corresponds to one CLI measurement resource ID or one CLI measurement resource combination ID; or
the existing field is used to indicate one or more CLI measurement resources from the one or more activated CLI measurement resources determined in the third indication information, and a specific value of the existing field corresponds to one CLI measurement resource ID or one CLI measurement resource combination ID.

42. The method according to claim 26, wherein the CLI measurement report comprises second resource identification information; and
the second resource identification information is used to indicate a CLI measurement resource ID corresponding to the CLI measurement resource determined from the one or more candidate CLI measurement resources.

43. The method according to claim 42, wherein the second resource identification information is carried by a MAC CE; and
the second resource identification information comprises one or more CLI measurement resource ID values, and each CLI measurement resource ID value occupies M bits of the MAC CE, wherein M is a positive integer.

44. The method according to claim 42, wherein the second resource identification information is carried by uplink control information UCI; and
the second resource identification information occupies $\left⌈{log}_{2}\left(K\right)\right⌉$ bits of the UCI, and *K* represents a quantity of CLI measurement resources determined from the one or more candidate CLI measurement resources.

45. The method according to claim 26, 43, or 44, wherein the CLI measurement report comprises CLI measurement result information; and
the CLI measurement result information is used to indicate a measurement result obtained by performing the CLI measurement based on the CLI measurement resource determined from the one or more candidate CLI measurement resources.

46. The method according to claim 45, wherein the CLI measurement result information is carried by the MAC CE;
the CLI measurement result information comprises one or more CLI reported values, and each CLI reported value corresponds to an interval within which one CLI measured value falls; or
the CLI measurement result information comprises one or more CLI measured values.

47. The method according to claim 45, wherein the CLI measurement result information is carried by the UCI;
the CLI measurement result information comprises one or more absolute CLI reported values, and each absolute CLI reported value corresponds to an interval within which one absolute CLI measured value falls; and/or
the CLI measurement result information comprises one or more differential CLI reported values, and each differential CLI reported value corresponds to an interval within which one differential CLI measured value falls.

48. The method according to claim 45, wherein the CLI measurement result information is carried by the UCI;
if *K* ≥ 2 , and *K* represents the quantity of CLI measurement resources determined from the one or more candidate CLI measurement resources, the CLI measurement result information comprises one absolute CLI reported value and one or more differential CLI reported values;
the one absolute CLI reported value corresponds to an interval within which one reference CLI measured value falls; and
each differential CLI reported value corresponds to an interval within which another CLI measured value other than the one reference CLI measured value falls.

49. A terminal device, comprising a processor, a memory, and a computer program or instructions stored in the memory, wherein the processor executes the computer program or instructions to implement the steps in the method according to any one of claims 1 to 25.

50. A network device, comprising a processor, a memory, and a computer program or instructions stored in the memory, wherein the processor executes the computer program or instructions to implement the steps in the method according to any one of claims 26 to 48.
